(19) **Europäisches Patentamt / European Patent Office / Office européen des brevets**

(11) **EP 3 723 046 B1**

(12) **EUROPEAN PATENT SPECIFICATION**

(45) Date of publication and mention of the grant of the patent:
**26.07.2023 Bulletin 2023/30**

(21) Application number: **18894813.7**

(22) Date of filing: **29.12.2018**

(51) International Patent Classification (IPC):
*G06T 7/246* (2017.01)    *G06V 10/764* (2022.01)
*G06V 20/56* (2022.01)    *G06F 18/2413* (2023.01)

(52) Cooperative Patent Classification (CPC):
**G06T 7/248; G06F 18/2413; G06V 10/764;**
**G06V 20/56;** G06T 2207/10016; G06T 2207/20076;
G06T 2207/20081; G06T 2207/20084;
G06T 2207/30201; G06T 2207/30232;
G06T 2207/30248

(86) International application number:
**PCT/CN2018/125157**

(87) International publication number:
**WO 2019/129255 (04.07.2019 Gazette 2019/27)**

(54) **TARGET TRACKING METHOD AND DEVICE**

ZIELVERFOLGUNGSVERFAHREN UND -VORRICHTUNG

PROCÉDÉ ET DISPOSITIF DE SUIVI DE CIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.12.2017 CN 201711479274**
**21.12.2018 CN 201811572062**

(43) Date of publication of application:
**14.10.2020 Bulletin 2020/42**

(73) Proprietor: **HUAWEI TECHNOLOGIES CO., LTD.**
**Shenzhen, Guangdong 518129 (CN)**

(72) Inventors:
• **LI, Zhigang**
**Shenzhen, Guangdong 518129 (CN)**
• **LIU, Jianzhuang**
**Shenzhen, Guangdong 518129 (CN)**
• **QIAN, Li**
**Shenzhen, Guangdong 518129 (CN)**

(74) Representative: **Gill Jennings & Every LLP**
**The Broadgate Tower**
**20 Primrose Street**
**London EC2A 2ES (GB)**

(56) References cited:
CN-A- 104 346 811    CN-A- 104 850 865
CN-A- 106 875 428    JP-A- 2015 103 103
JP-A- 2016 076 791    KR-A- 20170 077 545
US-A1- 2013 182 947    US-A1- 2016 180 543

• CHI ZHIZHEN ET AL: "Dual Deep Network for Visual Tracking", IEEE TRANSACTIONS ON IMAGE PROCESSING, IEE SERVICE CENTER , PISCATAWAY , NJ, US, vol. 26, no. 4, April 2017 (2017-04), pages 2005-2015, XP011644349, ISSN: 1057-7149, DOI: 10.1109/TIP.2017.2669880 [retrieved on 2017-03-29]

## Description

### TECHNICAL FIELD

This application relates to the information processing field, and more specifically, to a target tracking method and apparatus.

### BACKGROUND

Target tracking is a basic problem of computer vision, and is widely applied in actual life, such as self driving, human-machine interaction, traffic management, intelligent video surveillance, and AR/VR. Through the target tracking, positions of a target of interest can be continuously captured. This is a problem that cannot be ignored in many artificial intelligence tasks. Specifically, the target tracking (or visual target tracking) means that in a video sequence, when a position of a target in the first frame is given, the position of the target can be found in all subsequent frames. However, due to impact of factors such as blocking, motion blurring, a light change, a target appearance change, a background being suspected as a target, and a scale change, a drift phenomenon easily occurs in a tracking process, that is, tracking with a tracker fails. Therefore, it is important and valuable to resolve the tracker drift problem.

At present, many target tracking methods are available in academic, and have different performance and different application scenarios. According to different principles, five major types of tracking algorithms may be classified into: foreground detection, feature description, Bayesian tracking, core tracking, and online learning and tracking. However, according to these algorithms, for a latest input picture, at most, only a target position can be provided, and accuracy of the output target position cannot be ensured. In other words, a tracker cannot perform self-checking on whether a tracked position is correct. Once the tracker drifts, the tracker outputs a wrong position. To make a tracker effect more stable and reliable, a detection module is added to the tracker in the prior art, and a tracking algorithm and a detection algorithm are combined to resolve a tracker drift problem caused by deformation, partial blocking, and the like in a tracking process. However, the detection algorithm is quite slow but tracking is quite fast, a real-time application effect of the tracker is quite poor. If there are a few more tracked targets, in actual application, such a tracker cannot work due to an excessively large computing amount.

The work in "Dual Deep Network for Visual Tracking" by Zhizhen Chi et al., published in IEEE Transactions on Image Processing, vol. 26, no. 4 in April 2017, proposes a dual network to better utilize features among layers for visual tracking. In that work, the hierarchical features in different layers of a deep model are exploited and a dual structure is designed to obtain better feature representation from various streams.

## SUMMARY

This application provides a target tracking method, apparatus, and system, to quickly find that a tracker drifts, and improve accuracy of target tracking.

According to a first aspect, a target tracking method as defined in claim 1 is provided.

Determining, based on the drift determining model, whether the tracker drifts for tracking of the target object in the current frame of picture helps improve accuracy of target tracking. The drift determining model is obtained through modeling based on largest sample response values (that is, the largest values of the responses of the samples). It is precisely because the drift determining model is obtained through modeling based on the largest sample response values that drift determining or drift detection can be quickly and accurately performed by using the drift determining model. A difference between the drift determining model and an existing detection module is that the existing detection module is usually relatively complex, and a detection algorithm is very slow. This cannot meet a requirement for fast tracking. However, the drift determining model can rapidly respond to and output a tracking result.

With reference to the first aspect, in a first possible implementation of the first aspect, before the determining, based on a drift determining model, whether a tracker drifts for tracking of the target object in the current frame of picture, the method further includes:

receiving a first picture, and providing a target coordinate position in the first picture, where the first picture is the first frame of picture;

receiving a second picture, where the second picture and the first picture are continuous on a time axis, determining a corresponding position in the second picture based on the target coordinate position in the first picture, and performing sampling at a periphery of the corresponding position in the second picture, to obtain N test samples, where N is a positive integer greater than 1

performing feature extraction on each sample in the N test samples, to obtain N feature representations $\{X_1, X_2, ..., X_n, ..., X_N\}$ that are in a one-to-one correspondence with the N test samples, where n represents an $n^{th}$ sample in the N test samples;

inputting the N feature representations $\{X_1, X_2, ..., X_n, ..., X_N\}$ into a classifier to obtain N response values $\{Y_1, Y_2, ..., Y_n, ..., Y_N\}$ in a one-to-one correspondence with the N feature representations $\{X_1, X_2, ..., X_n, ..., X_N\}$, where $Y_n = wX_n$, w indicates a core value of the classifier, and $Y_n$ is used to indicate a probability value of likelihood that the $n^{th}$ sample is the target object in the second picture; and

performing modeling based on a largest response value $Y_{max}$ in the N response values $\{Y_1, Y_2, ..., Y_n, ..., Y_N\}$, to obtain the drift determining model.

As described above, modeling is performed based on many largest sample response values of many frames of training pictures, to obtain the drift determining model. Whether drift is generated in current tracking can be quickly detected by using the model, making important contributions to self-checking of the tracker and subsequent drift correction, thereby greatly improving tracking accuracy of the tracker.

With reference to the first aspect or the first possible implementation of the first aspect, in a second possible implementation of the first aspect, the determining, based on a drift determining model, whether a tracker drifts for tracking of the target object in the current frame of picture includes:

determining whether a largest sample response value in the current frame of picture falls outside a most probable interval constructed by the drift determining model; and if yes, determining that drift is generated; or if not, determining that no drift is generated, where the largest sample response value in the current frame of picture is a largest sample response value in a plurality of sample response values corresponding to a plurality of samples sampled in the current frame of picture.

With reference to the first aspect, in a third possible implementation of the first aspect, wherein before the determining a sampling sample corresponding to a largest sample response value in the target search window as the target object in the current frame of the picture, the method further includes:

sampling the current frame of picture based on the target search window, to obtain a plurality of sampling samples; and
separately computing sample response values of the plurality of sampling samples to obtain a plurality of sampling sample response values.

As described above, the drift generated by the tracker in a target tracking process is detected in time by using the drift determining model, and the drift is corrected in time by using a coarse-fine process, thereby ensuring accuracy of the tracker, providing fast and accurate input information for a downstream device of the tracker, so that the downstream device of the tracker can make more accurate determining.

With reference to the first aspect or the third possible implementation of the first aspect, in a fourth possible implementation of the first aspect, the determining, based on top k sample response values in each search window, a target search window in which the target object is most likely to appear includes:
entering the top k sample response values in each search window into a statistical function, to obtain statistical function values of the top k sample response values, and determining, by comparing the statistical function values of the top k sample response values, the target search window in which the target object is most likely to appear.

In an example useful for understanding the invention, but not forming part of it, the entering the top k sample response values in each search window into a statistical function, to obtain statistical function values of the top k sample response values, and determining, by comparing the statistical function values of the top k sample response values, the target search window in which the target object is most likely to appear includes:

$$\hat{z}_j = (\arg\max \, or \, \arg\min)_{z_i} \varphi(F_1(z_i),,,,F_k(z_i))$$

where $F_m(.)$ is an $m^{th}$ largest value of response values sorted in descending order in a corresponding response graph $F(.)$, $\varphi(.)$ is a statistical function, and the statistical function may be sum calculation, product calculation, median value calculation, average value calculation, variance calculation (where when the statistical function is variance calculation, a smaller value of the statistical function is preferred), or the like.

With reference to any one of the first aspect or the first or the second possible implementation of the first aspect, in a fifth possible implementation of the first aspect, when the tracking drift result is that no drift is generated for the tracking of the target object, the method further includes: updating the drift determining model based on the tracking drift result.

Specifically, before the updating the drift determining model based on the tracking drift result, the method may further include:
outputting the position of the target object in the current frame of picture.

Correspondingly, the updating the drift determining model based on the tracking drift result may include:
updating the drift determining model based on the position of the target object in the current frame of picture.

According to a second aspect, a target tracking apparatus as defined in claim 7 is provided.

According to a third aspect, a computer-readable storage medium as defined in claim 13 is provided.

In the embodiments of this application, a drift status of the tracker is detected in real time by using the drift determining model. The drift determining model is obtained by modeling the largest sample response values. The drift status of the tracker can be quickly found by using the drift determining model, so that accurate input information is provided for correction of the tracker. This helps obtain a more accurate tracking result. Therefore, regardless of in a self-driving scenario or in a video surveillance scenario, a more accurate tracking result helps with a subsequent process, thereby finally improving user experience.

**BRIEF DESCRIPTION OF DRAWINGS**

FIG. 1 is a schematic diagram of a system architecture to which a target tracking method and apparatus are applicable according to an embodiment of this application;

FIG. 2 is a schematic diagram of a physical object in a target tracking process according to an embodiment of this application;

FIG. 3 is a schematic diagram of a physical object for which tracking drift occurs in a target tracking process according to an embodiment of this application;

FIG. 4 is a schematic diagram of sampling in a target tracking method according to an embodiment of this application;

FIG. 5 is a schematic diagram of positive and negative samples in a target tracking method according to an embodiment of this application;

FIG. 6 is a schematic diagram of drift determining in a target tracking method according to an embodiment of this application;

FIG. 7 is a schematic diagram of a self-driving application scenario of a target tracking method according to an embodiment of this application;

FIG. 8 is a schematic system diagram of a self-driving application scenario of a target tracking method according to an embodiment of this application;

FIG. 9 is a schematic system diagram of a video surveillance application scenario of a target tracking method according to an embodiment of this application;

FIG. 10 is a schematic flowchart of a target tracking method according to an embodiment of this application;

FIG. 11 is a schematic block diagram of a target tracking apparatus according to an embodiment of this application;

FIG. 12 is a schematic structural diagram of a tracker according to an embodiment of this application;

FIG. 13 is a schematic block diagram of a model training apparatus according to an embodiment of this application; and

FIG. 14 is a schematic structural diagram of a model training apparatus according to an embodiment of this application.

## DESCRIPTION OF EMBODIMENTS

Target tracking is one of focuses in the field of computer vision research and is widely applied. A target tracking technology needs to be used for tracking focusing of the camera, automatic target tracking of an unmanned aerial vehicle, and the like. In addition, there is also tracking of a specific object, for example, human body tracking, vehicle tracking in a traffic monitoring system, face tracking, and gesture tracking in an intelligent interaction system.

In brief, the target tracking is establishing, in a continuous video sequence, a target position relationship of a to-be-tracked object, to obtain a complete motion trajectory of the target object. If a target coordinate position in the first frame of an image is given, an exact position of a target in a next frame of the image is computed. In a motion process, a target may present some changes on an image, such as a posture or shape change, a scale change, a background blocking change, or a light intensity change. Such changes often cause tracking drift, that is, an error occurs during positioning of a target position. This application is intended to detect drift in time in a target tracking process, and a result of the detection may be used to correct the drift, thereby improving precision of target tracking.

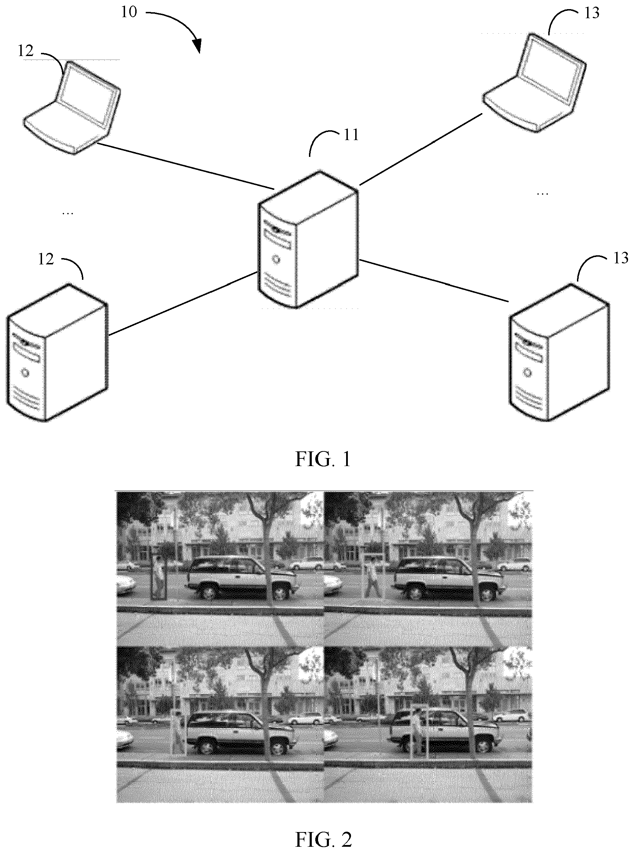

FIG. 1 is a schematic diagram of a communications system 10 to which a target tracking method and apparatus are applicable according to an embodiment of this application. As shown in FIG. 1, the communications system 10 may include a server device 11. The server device 11 may be configured to perform target tracking on received data (that is, a current frame of picture, for example, a frame of picture in a to-be-tracked video sequence). In a possible design, a model training module may be deployed in the server device 11, or the server device 11 may be a server cluster or a cloud server. The model training module is configured to train a drift determining model, so that after receiving a picture on which target tracking is to be performed, the server device 11 tracks a target in the picture by using the trained drift determining model. Specifically, a classifier may be deployed in the model training module, and is configured to obtain a response value of a feature in the picture in a model training process. A core value w in the classifier may be updated based on a tracking result. In this embodiment of this application, the server device 11 may be configured to determine to train and continuously update the drift determining model, and the server device 11 may be further configured to determine, based on the trained drift determining model, whether drift is generated during the target tracking in the current picture frame, that is, whether an output target position is a real position of the target in the current frame of picture. The following describes a specific function of the server device 11 in detail with reference to a specific embodiment.

Optionally, the communications system 10 further includes a data receiving device 12, configured to receive to-be-processed data and transmit the to-be-processed data to the server device 11. Specifically, the data receiving device 12 may obtain the to-be-processed data through manual input, network search, or the like.

Optionally, the communications system 10 further includes a client device 13, configured to perform next-step target tracking processing by using a processing result from the server device 11. For example, when determining that drift is generated during the tracking, the client device 13 may correct the drift. Certainly, in this application, a correction process may alternatively be performed by the server device 11. It should be noted that, in addition to the correction process, in this application, the server device 11 may further output the trained drift determining model to the client device 13, and the client device 13 determines, based on the drift determining model, whether drift is generated during the target tracking. In other words, in this application, a program of determining whether the drift is generated and a program of correcting the drift after the drift is generated may both be implemented in the server device 11, or may both be implemented in the client device 13, or may be separately implemented by the server device 11 and the client device 13. This is not limited herein.

It should be understood that functions of the server device, the data receiving device, and the client device that are listed above are merely examples, and should not constitute any limitation on this application. Functions of the data receiving device and the client device may also be implemented by the server device. This is not limited in this application.

In addition, it should be further understood that deployment of the server device, the data receiving device, and the client device is not particularly limited in this application. For example, the server device, the data receiving device, and the client device may be deployed in different physical devices, and the different physical devices respectively implement corresponding functions of the server device, the data receiving device, and the client device. The server device, the data receiving device, and the client device that are deployed in the different physical devices may be connected by using a network. Alternatively, the server device, the data receiving device, and the client device may be deployed in a same physical device, and functions of the server device, the data receiving device, and the client device are implemented by using the physical device. Alternatively, the data receiving device and the client device may be integrated into a same terminal device or in different terminal devices, and are separately deployed in a same physical device together with the terminal device, so that the physical device implements respective functions.

It should be understood that the communications system shown in FIG. 1 is merely described as an example, and should not constitute any limitation on this application. Quantities and deployment manners of server devices and client devices are not particularly limited in this application. For example, there may be one or more server devices, that is, a plurality of server devices may form a server cluster.

In this embodiment of this application, the server device may be a server, and may include a processor, a hard disk, a memory, a system bus, and the like. Composition of the server device is similar to an architecture of a general-purpose computer. Because the server device needs to provide a highly reliable service, the server device may have a higher requirement in terms of processing capability, stability, reliability, security, scalability, manageability, and the like.

It should be understood that the client device may also be referred to as a terminal device, user equipment (user equipment, UE), an access terminal, a subscriber unit, a subscriber station, a mobile station, a mobile console, a remote station, a remote terminal, a mobile device, a user terminal, a terminal, a wireless communications device, a user agent, or a user apparatus. The client device in the embodiments of this application may be a mobile phone (mobile phone), a tablet computer (Pad), a computer with a wireless sending/receiving function, a virtual reality (Virtual Reality, VR) terminal device, an augmented reality (Augmented Reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. In this application, the foregoing client device and a chip that may be disposed in the foregoing client device are collectively referred to as client devices.

It should be further understood that, when the server device, the data receiving device, and the client device are deployed in different physical devices, the server device, the data receiving device, and the client device may directly communicate with each other by using a network such as an Ethernet (for example, through a communications cable such as an optical fiber). Alternatively, the server device, the data receiving device, and the client device may indirectly communicate with each other by using a forwarding network including one or more network devices. Alternatively, the server device, the data receiving device, and the client device may communicate with each other by using a radio access network.

In addition, the radio access network may use various communications systems, for example, a global system for mobile communications (Global System of Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Time Evolution, LTE) system, a long term evolution advanced (LTE-Advanced, LTE-A) system, an LTE frequency division duplex (Frequency Division Duplex, FDD) system, an LTE time division duplex (Time Division Duplex, TDD), a universal mobile telecommunications system (Universal Mobile Telecommunication System, UMTS), a worldwide interoperability for microwave access (Worldwide Interoperability for Microwave Access, WiMAX) communications system, and a next-generation communications system (for example, a fifth-generation (fifth-generation, 5G) communications system), a convergence system of a plurality of access systems, an evolved system, or the like. The 5G system may also be referred to as a new radio (new radio access technology, NR) access technology system.

It should be further understood that the communications system shown in FIG. 1 is merely a possible application scenario of the embodiments of this application, and should not constitute any limitation on this application. For example, the communications system may further include another device.

Through brief descriptions in the foregoing, a concept of target tracking and related research are further described herein with reference to the accompanying drawings. Specifically, the target tracking means that in a continuous video sequence, on the premise that a coordinate position of a target in the first frame is given, positions of the target in all subsequent frames can be found. As shown in FIG. 2, if the first frame of picture (the upper left picture) and an initial position (shown by a rectangular box on the picture) of a target are given, positions of the target (shown by a rectangular box in each picture) are given in next several frames of pictures (on the upper right, lower left, and lower right) by the tracker.

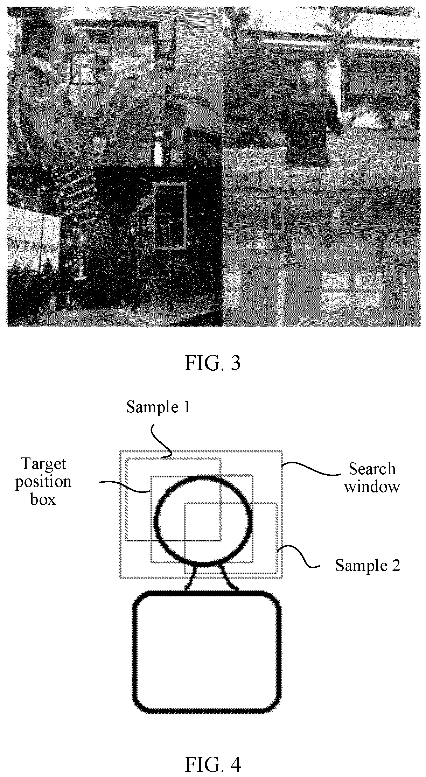

However, due to impact of factors such as blocking, motion blurring, a light change, a target appearance change, a background being suspected as a target, and a scale change, a tracking drift phenomenon easily occurs in a tracking process, that is, tracking with a tracker fails. A tracked target on a picture (on the upper left) shown in FIG. 3 is a toy tiger, where a box on the left of the picture is a real position that is of the target and that is manually calibrated in a test set, and a box on the right is a target position tracked by a tracker. In the tracking process, the target is blocked by the external environment, causing the tracker to drift. In the figure (on the upper right, lower left, and lower right), the tracker is caused to drift respectively due to motion blurring, intensive light, and a background being suspected as a target.

Target tracking is one of focuses in the field of computer vision research and is widely applied. A target tracking technology needs to be used for tracking focusing of the camera, automatic target tracking of an unmanned aerial vehicle, and the like. In addition, there is also tracking of a specific object, for example, human body tracking, vehicle tracking in a traffic monitoring system, face tracking, and gesture tracking in an intelligent interaction system.

Since the target tracking is applied widely, and it is common that a tracker generates tracking drift in a tracking process, this application provides a target tracking method, to quickly find tracking drift, to ensure both real-time tracking and tracking accuracy of a tracker. Further, when it is found that a tracker drifts, the target tracking method provided in this application can further correct the drift of the tracker in time, so that the tracker can effectively run for a long time, and accuracy of target tracking is greatly improved.

It should be noted that, through efforts made by scientists in the past few decades, research on the target tracking is made from classic tracking methods such as Meanshift, particle filtering (Particle Filter), and Kalman filtering (Kalman Filter) to a method based on detection (Track By Detection) or correlation filtering (Correlation Filter), achieving a tremendous development, and appearance of an online learning method further helps the target tracking reach a new step.

For ease of understanding, a tracking process of an online learning tracker is first described briefly.

1. Picture input

For example, a common video camera is used to capture a picture (such as 30 FPS) at a fixed frequency, and transmit the captured picture for a next step. It should be noted that, in the target tracking method shown in this application, continuity between collected pictures is a precondition for tracking.

2. Sampling

Because pictures captured by a camera have continuity, positions of a target in two consecutive frames of pictures do not differ greatly. As described above, in a continuous video sequence (which are expressed as consecutive picture frames herein), first, a target coordinate position on the first frame of picture is given. When a new picture is input, a tracker determines a possible target position on the new picture, the possible target position corresponds to the target coordinate position on the first frame of picture, and sampling is performed in a specific range (for example, a preset search window) around the possible target position, to obtain a batch of test samples. For example, a central point of the first frame of picture is used as an origin of a coordinate system, a rightward direction is a positive direction of an X axis, a leftward direction is a negative direction of the X axis, an upward direction is a positive direction of a Y axis, and a downward direction is a negative direction of the Y axis. It is assumed that a target coordinate position of a target object on the first frame of picture is (2, 3). For brevity, only one coordinate point is used as an example herein, and an actual target coordinate position may have a plurality of coordinate points. Therefore, on the foregoing new picture, coordinates of the possible target position are also (2, 3). Sizes of image frames in a same video frame are the same. Therefore, assuming that in a same coordinate system, coordinates of corresponding positions can be absolutely obtained. Details are not described below again.

As shown in FIG. 4, the thick line is a human body contour, and the circle represents a human face. In the figure, a smallest box (a target position box) that exactly includes the human face is a target coordinate position on the first frame of picture, in a figure with the human face as a center, a largest box in the figure is a search window formed around the target coordinate position on the first frame of picture (where it should be noted that, a center of a search window in a current frame of picture is usually a center of a target coordinate position in a previous frame of picture, a size of the search window is in direct proportion to a target size, and different shapes may be defined for different search windows, and may be rectangular, circular, or of another shape). Then the target position box determined in the previous frame is slid in various directions in the search window, to form a batch of samples. For example, the other two boxes in FIG. 4 are two samples obtained in such a sampling manner.

It should be noted herein that there may be a plurality of sampling manners. For example, sampling may be performed in a multi-scale sampling manner, where the multi-scale sampling manner is scaling a target position box determined in a previous frame at a specific ratio (including a plurality of proportions) and then sampling the target position box, so that scale adaptation can be implemented when a tracker outputs a target. A sampling method is not limited in this application.

3. Feature extraction

Feature extraction is performed on each of the batch of samples obtained through sampling. Common features include a histogram of oriented gradient (Histogram of Oriented Gradient, HOG), a local binary pattern (Local Binary Pattern, LPB) feature, and a combination of a plurality of features. After feature extraction, each sample may be represented by a feature of the sample as $X = [x1, x2, , , xn]$, where x1, x2, ... denote different features of X.

4. Sample response

After a feature representation of each sample is obtained, the tracking problem is converted into a regression problem, which is specifically:

$$y = \mathbf{WX} \, .$$

As described above, x herein is a sample represented by a sample feature, w is a core value of a classifier, and y is a sample regression value, and is also referred to as a response value, where a value range of the response value is between [0, 1]. A larger value of y indicates a higher probability that a sample corresponding to the value becomes a target in this frame of picture.

It should be noted that the classifier is obtained through training after positive and negative sampling is performed on a previous frame. Because a target coordinate position is given on the first frame of picture, a corresponding value of w is obtained after positive and negative samples are sampled. The value of w is updated by training the classifier. For example, when the first frame of picture is input, positive and negative samples are sampled based on a target coordinate position on the first frame of picture, and corresponding w is obtained based on the positive and negative samples. Herein, w is represented as w1. After a next frame of the first frame is tracked, positive and negative samples are re-sampled based on a target coordinate position obtained through tracking of the frame, and w1 is updated based on the positive and negative samples obtained through the re-sampling, to obtain w2. Then, a next frame is tracked, and so on.

5. Largest response value

Through the foregoing step, a series of regression values y corresponding to sampling samples in each frame of picture may be obtained. A sample corresponding to a largest regression value $Y_{max}$ in the series of regression values y of each frame of picture is: A target coordinate position tracked by the tracker in the frame of picture. Therefore, a process of tracking each frame of picture by the tracker may be understood as a process of looking for a sample corresponding to a largest response value. Because each frame of picture has a largest sample response value, the present invention is intended to perform modeling based on these largest sample response values, and determine, by using the built model, whether the tracker drifts. A specific modeling manner and a manner of determining tracking drift by using the model are described in detail below.

6. Outputting a target coordinate position corresponding to the largest response value, and updating the classifier and a target template

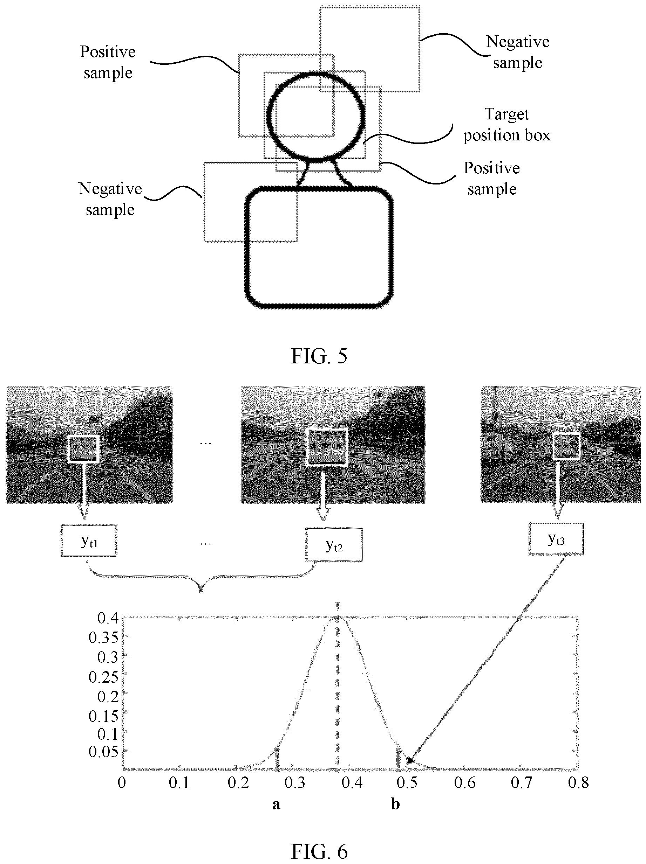

In the foregoing step, for each frame of picture, a sample corresponding to the largest response value of the frame of picture is found, and the sample is used as a target coordinate position on the frame of picture. A frame of picture is used as an example. Herein, the frame of picture may be referred to as a first picture. After a sample corresponding to a largest response value of the first picture is found, a target coordinate position on the first picture is determined based on a coordinate position of the sample. Then, a specific quantity of positive samples are collected around the target coordinate position on the first picture, a specific quantity of negative samples are collected at a position that is far away from the target coordinate position on the first picture, and the classifier is updated based on the collected positive samples and negative samples, to obtain an updated value of w. It should be noted that, based on the foregoing distance, both the positive samples and negative samples are obtained from the first picture, and "around the target coordinate position" or "far away from the target coordinate position" is relative. Specific coordinate ranges of "around" and "far away" are not limited in this application. However, it may be understood that, usually, the positive samples and a box corresponding to the target coordinate position overlap relatively largely, where overlapping is above 0.5, and the negative samples and the box corresponding to the target coordinate position overlap relatively slightly, where overlapping is from 0 to 0.2. Specifically, it can be learned from FIG. 5 that, in FIG. 5, a box exactly holding a human face, that is, a box using the human face as a center, is a box (a target position box) corresponding to a target coordinate position of this frame of picture. Several boxes that overlap relatively largely with the box are positive samples, several boxes that overlap relatively lightly with the box are negative samples. In addition, the box corresponding to the target position is merely an example described in FIG. 5. As described above, in actual application, the box may be a square box, a rectangular box, a circular box, or a box in another shape. This is not limited in this application.

The first picture is still used as an example. When the classifier is updated, the target template is updated by using the sample corresponding to the largest response value of the first picture. The target template described herein is a template of the target object in a picture. The target template is continuously updated based on a sample corresponding to a largest sample response value obtained through each tracking, so that the target template is continuously perfected, and the tracker is more robust.

After all these steps, tracking of the first picture is completed, and an updated classifier and an updated target template that are obtained based on a tracking result of the first picture are also obtained. A next frame of picture is then tracked based on the updated classifier and the updated target template. A manner of processing a next frame of picture is the same as a manner of processing the first picture, so that tracking processing is performed sequentially on consecutive picture frames in a video sequence, to continuously update the classifier and the target template.

The foregoing is a brief process description of the online learning tracker provided in this embodiment of this application. Because the classifier and the target template are continuously updated in this solution, robustness of the classifier and the target template is relatively good, having a particular capability of resisting non-rigid deformation of the target in a tracking process. Further, in this application, modeling is performed based on the largest response value of each frame, and whether a tracker drifts is detected in time by using the built model. The tracking method provided in this application enables the tracker to have relatively high accuracy. In another embodiment of this application, after it is detected that a tracker drifts, a position at which a target most probably appears may be precisely determined by using a coarse-fine method, thereby effectively correcting drift of the tracker. In this way, the tracker can effectively run for a long time, and accuracy of target tracking is greatly improved.

For the foregoing "performing modeling based on the largest response value of each frame, and detecting, in time by using the built model, whether a tracker drifts", refer to FIG. 6.

In FIG. 6, for a series of consecutive pictures, a box in the first frame of picture in the figure represents a target coordinate position tracked at a moment t1, and after a period of time (represented by ... in the figure), a box in the second frame of picture in the figure represents a target coordinate position tracked at a moment t2, a largest sample response value in the first frame of picture (that is, the moment 11) is $y_{t1}$, and a largest sample response value in the second frame of picture (that is, the moment t2) is $y_{t2}$. Largest response values such as $y_{t1}$, ..., and $y_{t2}$ corresponding to a series of consecutive moments from the moment t1 to the moment t2 are modeled. Then, a parabolic graph (where the parabolic graph may be a normal distribution graph) shown in FIG. 6 may be obtained by using the built model.

In a subsequent tracking process, for example, after a largest response value $y_{t3}$ of a picture frame corresponding to a moment t3 in FIG. 6 is obtained, $y_{t3}$ is matched by using the built model. When $y_{t3}$ falls outside a most probable interval of the parabolic graph of the built model, it is considered that the response value $y_{t3}$ in this case does not belong to the model, and it is considered that the tracker drifts at the moment t3. Further, the drift may be corrected. An area surrounded by a vertical line a, a vertical line b, a curve, and a coordinate axis in the figure is the most probable interval. It should be noted that the most probable interval herein may be preset based on a precision requirement for the tracker. Using a model in FIG. 6 as an example, for a tracker with a higher precision requirement, values of horizontal coordinates corresponding to the vertical lines a and b are closer to a central axis of the curve.

It should be noted that, the normal distribution graph herein is obtained by using an example in which the model is a single-Gaussian model. When an initially built model is another model, the model may not necessarily be presented as a parabolic graph, or may be presented as another corresponding graph. This is not limited in this embodiment of this application.

To more completely understand the application scenario of this solution, the following describes an application scenario in which this application may be used, to help understand application of the solution.

Application scenario 1: Self driving (and assisted driving)

Self driving (and assisted driving) is a very hot topic at present. With economic development, a quantity of automobiles in the world increases continuously, and a vehicle accident rate also increases greatly, bringing a huge threat to life and property of people. Human factors are main factors that cause traffic accidents. How to reduce human errors is an important issue in improving driving safety. Therefore, an advanced driving assistant system (ADAS, Advanced Driving Assistant System) and an autonomous driving system (ADS, Autonomous Driving System) attract attention of major companies around the world. For example, huge amounts of money are invested by corporations such as Google, Tesla, Uber, and Baidu to research, develop, and deploy related technologies. Because video cameras are at lower price relative to hardware devices such as lasers, it is a research and development direction of many companies to construct a perception system centered on visual perception.

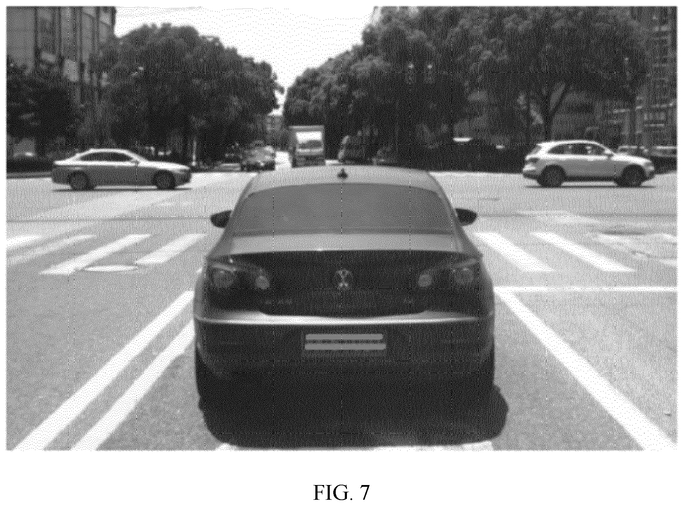

FIG. 7 shows a road surface photographed by a front-facing video camera on a self-driving vehicle. A main objective of visual perception is to detect, in a picture, positions of front key obstacles (a person and a vehicle in a box) in the picture and in a vehicle body coordinate system.

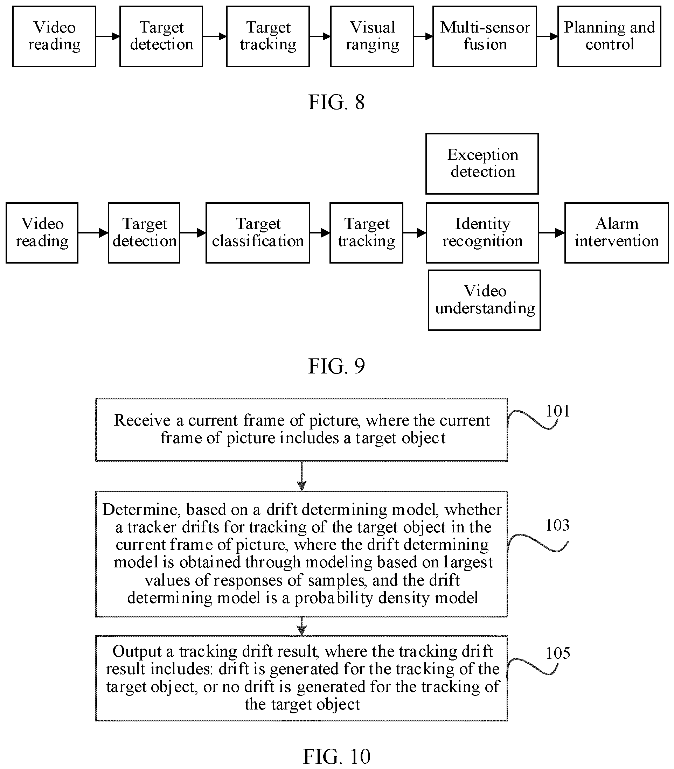

FIG. 8 shows several main components of a self-driving system that uses a vision-centered perception system.

1. Video reading

A plurality of cameras are installed on the top of a self-driving vehicle, to photograph a driving road surface from a plurality of orientations. Then, pictures are sent to a visual detection module. Usually, a video camera collects pictures at a speed of 30 Hz.

2. Target detection

The visual detection part performs key obstacle detection, lane line detection, and traffic light detection on an input picture, and provides a position of a corresponding target on the picture. A key obstacle is a defined vehicle, pedestrian, or the like. Currently, deep learning achieves a good effect in a direction such as pedestrian detection. Therefore, a convolutional neural network is usually used to perform target detection. However, due to a limited hardware condition, a current target detection neural network cannot meet a real-time requirement while ensuring that an effect meets a requirement. Therefore, target tracking needs to be added to ensure real-time performance of visual perception.

3. Target tracking

The target tracking can overcome a weak point of a low target detection speed, and can smooth a detection result. Therefore, the target tracking is a very important part of the visual perception module. Commonly used trackers include a CT (compressive tracke, compressive tracker), an STC (Spatio-Temporal Context, spatio-temporal context) tracker, a KCF (Kernelized correlation filte, kernelized correlation filter) tracker, a Struck tracker, a CSK tracker, and the like. Usually, a speed of a tracker can reach 30 to 60 FPS, and some even up to 200 to 300 FPS. However, in a real tracking scenario, many trackers cannot perform self-checking on tracking accuracy. Once a tracker drifts, an incorrect position is output. In self driving, outputting an incorrect position means that a vehicle is output in a place where there is no vehicle, directly affecting proper decision making by planning and control. Therefore, it is quite important to find and correct drift of a tracker in time. The method provided in this application is intended to improve a vision perception part of self driving, and detect in time tracking drift occurring in a tracking process of a tracker, to release in real time a target that has been out of the view, and ensure accuracy of an output result.

4. Visual ranging

Ranging a target detected on an image is: For a target on each visually detected image, a distance between the target and a vehicle in a real scenario is obtained according to a visual ranging principle. In visual detection, only a position of a target in an image coordinate system can be detected, and a distance within which there is a person or a vehicle in a real three-dimensional scenario can be fed back to the planning and control only through visual ranging. Currently, most visual ranging principles are based on a grounded point, and are greatly affected by shaking of a visual detection box. However, the target tracking described in the previous part 3 can smooth a visual detection result, making visual ranging more accurate.

5. Multi-sensor fusion

A video camera is only one of sensors, and desirable existence information of a key obstacle can be provided through visual perception. However, precise obstacle speed information cannot be provided. Other sensors such as Ibeo can better obtain obstacle speed information. Comprehensive information (a position, a category, a speed, and a driving direction) of a key obstacle on a driving road surface can be accurately provided through fusion of a plurality of sensors. The multi-sensor fusion is also an important part of self driving.

6. Planning and control

Functions of the component are as follows: Proper path planning and proper state control of an unmanned vehicle are performed by using comprehensive obstacle information that is output through multi-sensor fusion.

This part determines how an unmanned vehicle travels, and is a control center of a self-driving vehicle.

Visual target tracking is applied to a sensing module of self driving (assisted driving), and can overcome a weak point of a non-real-time speed of a detector and output a smooth target position, to improve ranging precision, provide an ID for an obstacle for speed measurement, and the like. Therefore, video target tracking is an indispensable part of a vision-centered sensing module in self driving (assisted driving). The method provided in this patent is applied to a visual perception part of a self-driving module, and can detect drift of a tracker in time, so that a visual perception output result is more accurate.

Application scenario 2: Intelligent video surveillance

With increasing demands for security defense and an onsite recording and alarm system in fields such as banking, electric power, transportation, security check, and military facilities, requirements for monitoring product quality are increasingly high. Video surveillance is widely applied in various aspects of production and life. An intelligent video surveillance system has been widely used in public places such as banks, shopping malls, stations, and road intersections.

FIG. 9 shows several main components of intelligent video surveillance.

1. Video reading

In a related scenario, a camera is installed to perceive a monitoring range scenario, and a picture obtained through photographing is sent to a target detection module. Usually, a video camera collects pictures at a speed of 30 Hz.

2. Target detection

This part mainly detects a motion target, to be specific, a change area is detected in a sequence image, and the motion target is extracted from a background image. For post-processing processes such as target classification, tracking, and behavior understanding, only a pixel area that is in an image and that corresponds to a motion target is considered. Correct detection and segmentation of the motion target are very important for post-processing.

3. Target classification

This part is to separate out a target of interest. For example, at the door of a bank, a vehicle is not a primary goal of interest; instead, a person is a primary goal of interest. In this part, a focused target is separated out based on different objects of interest in scenarios.

4. Target tracking

The target tracking can overcome a weak point of a low target detection speed, and can correlate a same target in consecutive frames for further analysis. This part can ensure real-time running of the system. The method provided in this application is applied to this part, to detect and correct drift of a tracker in time, so that a perception result is accurately transferred to a next processing module.

5. Video understanding (or identity recognition, exception detection, or the like)

A sensing module sends consecutive frame information of a detected target of interest to the module through continuous processing of a video. The module further analyzes the information, and detects a dangerous state.

6. Alarm intervention

After a danger signal is detected in step 5, the system sends an alarm, to notify relevant personnel to handle the site, thereby preventing further deterioration of a hazardous condition.

Visual target tracking is an important guarantee for real-time running of the intelligent video surveillance system. The method provided in this patent is used for a target tracking part of intelligent video surveillance, and a drift generated in a target tracking process is found and detected in time, and accurate target information of interest may be further sent to a next module, to ensure normal running of an intelligent video surveillance system.

The foregoing scenario examples are merely two relatively typical application scenarios in many application scenarios. It may be learned from the foregoing scenario examples that, the method and apparatus provided in this application may be applied to all products that may use visual target tracking, such as an unmanned vehicle, a vehicle-mounted multi-sensor fusion sensing device including vision, an intelligent monitoring apparatus, and a smartphone. Specifically, the method provided in this application may be deployed on a computing node of a vehicle-mounted visual perception device, and performance of a visual tracker is improved through software reconstruction, to improve overall visual output performance. It should be noted that this is merely used as an example to help readers understand a product form of this application, and is not intended to limit product implementation in this application.

The following describes a target tracking method 100 in this application with reference to FIG. 10.

S 101. Receive a current frame of picture, where the current frame of picture includes a target object.

The current frame of picture described herein is a frame of picture in a video sequence, instead of an isolated picture. The current frame of picture may be obtained usually by using a video camera at a fixed frequency.

S103. Determine, based on a drift determining model, whether a tracker drifts for tracking of the target object in the current frame of picture, where the drift determining model is obtained through modeling based on largest values of responses of samples; the drift determining model is a probability density model; the sample is a training sample used to train the drift determining model, where the training sample is collected from a training picture, and the training picture includes the target object; and the response value of the sample is a probability value of likelihood that the training sample is the target object in the training picture.

It should be noted that, the probability density model may be specifically presented in a form of a probability density function. The probability density function is used to intuitively describe a continuous random variable (where the function is referred to as a distribution law in a case of a discrete random variable), and indicates a probability that an instantaneous amplitude falls within a specified range. Therefore, the probability density function is a function of an amplitude. A probability in a continuous sample space case is referred to as a probability density. When a quantity of tests is infinitely increased, a histogram approaches a smooth curve, and an area surrounded by the curve represents a probability. The curve is a probability density function of this test sample.

In mathematics, a probability density function (which may be referred to as a density function for short without confusion) of a continuous random variable is a function describing a possibility that an output value of the random variable is close to a specific determined value. A probability that a value of the random variable falls within an area is an integration of the probability density function in the area.

In this embodiment of this application, the determining, based on a drift determining model, whether a tracker drifts for tracking of the target object in the current frame of picture is specifically determining whether a largest response value of each sample falls within an interval constructed based on the probability density function, where a range of the interval herein may be set based on a specific precision requirement, and is not limited herein. For content related to the probability density model below, also refer to the explanation herein. To avoid redundancy, details are not described again.

The tracker outputs a position of the target in the current frame of picture. In this application, for the position that is of the target in the current frame of picture and that is output by the tracker, the drift determining model is used to determine whether the position is accurate, that is, whether the position is a real position of the target in the current frame of picture, to be specific, a specific meaning of whether drift is generated during tracking. It should be noted that the target tracking method in this application may be integrated into a conventional tracker, so that in addition to a conventional tracking function, the target tracking method in this application further has a drift detection function and even a drift correction function that is mentioned below in this application. Certainly, the target tracking method in this application may alternatively be a new module, where the new module is mounted on a conventional tracker, or the new module may separately work with the conventional tracker. This is not limited in this application.

For "the drift determining model is obtained through modeling based on largest values of responses of samples" mentioned in S 103, it should be noted that the drift determining model described herein is specifically used to perform drift determining, or drift detection, on a tracking result. That is, the model is used to determine or detect accuracy of the tracking result. The drift determining model may be trained by a server in advance for later use. Certainly, when a terminal is capable of performing model training, the terminal may alternatively train the drift determining model for later use. A training process mainly includes collecting a training sample in a training picture. Usually, this sampling process is performed within a particular range around a target coordinate position in the training picture. A search window may be preset for this range. A center of the search window is usually a center of a target position in a previous frame of picture. A search window size is in direct proportion to a target size, different shapes may be defined for different search windows. The search window may be rectangular, circular, or of any other shape that can implement a function of the search window. Then, a sampling box may be slid in various directions within the search window, to form a batch of samples. A size and a shape of the sampling box herein are the same as those of the target position box in a previous frame of picture. In practice, in addition to the foregoing manner, a multi-scale sampling manner may further be used for sampling. That is, the target position box in the previous frame of picture is scaled at a specific ratio (including a plurality of proportions) to obtain a sampling box, and then sampling is performed based on the multi-scale sampling box. There are other sampling manners in practice, and details are not described in this application. After a batch of samples is obtained through sampling, feature extraction is performed on each of the samples. Common features include a histogram of oriented gradient (Histogram of Oriented Gradient, HOG), a local binary pattern (Local Binary Pattern, LPB) feature, a combination of a plurality of features, and the like. After feature extraction, each sample has its own feature representation. Then, a classifier computes the feature representation of each sample, to obtain a response value of each feature representation. That is, each sample corresponds to a plurality of response values, and the largest value of the response values is a largest response value of the sample. A position that is of the sample and that corresponds to the largest response value of the sample is a position at which the target is most likely to appear on the training picture. Each training sample has one largest sample response value, and many samples have many largest sample response values. The drift determining model in this application is obtained through modeling based on these largest sample response values.

S 105. Output a tracking drift result, where the tracking drift result includes: drift is generated for the tracking of the target object, or no drift is generated for the tracking of the target object.

In the present invention, whether the tracker drifts for the tracking of the target object in the current frame of picture is determined based on the drift determining model. The drift determining model is obtained through modeling based on the largest values of the responses of the samples. Therefore, a drift status of the tracker can be quickly detected, to provide fast and accurate input for timely drift correction processing.

Based on this embodiment of this application, further, optionally, before the determining, based on a drift determining model, whether a tracker drifts for tracking of the target object in the current frame of picture, the method further includes a model training method in S 102, specifically including the following steps.

S1021. Receive a first picture, and provide a target coordinate position on the first picture, where the first picture is the first frame of picture.

S1022. Receive a second picture, where the second picture and the first picture are continuous on a time axis, determine a corresponding position in the second picture based on the target coordinate position in the first picture, and perform sampling at a periphery of the corresponding position in the second picture, to obtain N test samples, where N is a positive integer greater than 1.

S1023. Perform feature extraction on each sample in the N test samples, to obtain N feature representations $\{X_1, X_2, ..., X_n, ..., X_N\}$ that are in a one-to-one correspondence with the N test samples, where n represents an $n^{th}$ sample in the N test samples.

$X_1$ is used to represent a feature representation of the first test sample, and specifically, $X_1$ may include a plurality of features, for example, a histogram of oriented gradient (Histogram of Oriented Gradient, HOG) and a local binary pattern (Local Binary Pattern, LPB) feature. This has been described in detail in the foregoing feature extraction step of this application, and details are not described herein again.

S1024. Input the N feature representations $\{X_1, X_2, ..., X_n, ..., X_N\}$ into a classifier to obtain N response values $\{Y_1, Y_2, ..., Y_n, ..., Y_N\}$ in a one-to-one correspondence with the N feature representations $\{X_1, X_2, ..., X_n, ..., X_N\}$, where $Y_n=wX_n$, w indicates a core value of the classifier, and $Y_n$ is used to indicate a probability value of likelihood that the $n^{th}$ sample is the target object in the second picture.

In the tracker field, a tracking problem herein is usually converted into a regression problem, that is, Y=wX, where Y is a sample regression value of a sample X, that is, the sample response value described above. A value of the sample response value Y ranges from 0 to 1, and a larger value of Y indicates a higher possibility that X corresponding to Y becomes a target in this frame of picture, w is a core value of the classifier, and is obtained through training after positive and negative sampling is performed on a previous frame of picture. Specifically, when the first frame of picture is received, a target position in the first frame of picture is given, and w is obtained after positive and negative sampling is performed based on the target position. Tracking starts when the second frame of picture is received. After the second frame of picture is tracked, if no drift is generated, a positive sample and a negative sample are sampled again based on a tracking result of the second frame of picture, and w is updated based on this. Then, target tracking of a next frame of picture is performed based on updated w. Steps are performed repeatedly in such a way.

S 1025. Perform modeling based on a largest response value $Y_{max}$ in the N response values $\{Y_1, Y_2, ..., Y_n, ..., Y_N\}$, to obtain the drift determining model.

Each sample corresponds to one sample response value. One training picture has a plurality of samples, that is, has a plurality of sample response values. The largest value in the sample response values is a largest response value of interest, and is also the largest sample response value mentioned above. Modeling is performed based on many largest sample response values of many frames of training pictures, to obtain the drift determining model. Whether drift is generated during current tracking can be rapidly detected by using the model, making important contributions to self-checking of the tracker and subsequent drift correction, thereby greatly improving tracking accuracy of the tracker. In a specific application scenario of the tracker, for example, in the foregoing exemplified self driving, tracking accuracy can be quickly determined. In this way, effective input information is provided to the planning and control, to output a more reliable control signal to an unmanned vehicle.

Specifically, the "modeling" described herein may be performed in the following manner: A pre-selected model is initialized. For example, when the pre-selected model is a single-Gaussian model, a largest sample response value of 1 to n (where n may be set to 10 to 15) frames that have been tracked in a previous tracking process is recorded, and a Gaussian model parameter is estimated by using a maximum likelihood method, to complete model initialization. Then, drift detection is performed on subsequent tracking based on the initialized model, and the model is continuously updated and perfected based on a detection result.

Specifically, the determining, based on a drift determining model, whether a tracker drifts for tracking of the target object in the current frame of picture in S103 may include:

determining whether a largest sample response value in the current frame of picture falls outside a most probable interval constructed by the drift determining model; and if yes, determining that drift is generated; or if not, determining that no drift is generated, where the largest sample response value in the current frame of picture is a largest sample response value in a plurality of sample response values corresponding to a plurality of samples sampled in the current frame of picture.

The drift determining model is a probability density model, and the probability density model is usually presented in a form of a probability density function. Therefore, the most probable interval constructed by the drift determining model is specifically a most probable interval constructed by the probability density function. Specifically, the most probable interval is a preset probability interval. That is, when a requirement for determining precision is relatively high, a range of the interval may be set to be narrower, and a sample whose largest response value does not fall within the interval is determined as a sample generating drift. When the requirement for determining precision is not quite high, the range of the interval may be set to be relatively wide.

Specifically, as shown in FIG. 6, for a series of consecutive pictures, in three pictures in the upper part of FIG. 6, a box in the first frame of picture represents a target coordinate position tracked at a moment t1, and after a period of time (represented by ... in the figure), a box in the second frame of picture in the figure represents a target coordinate position tracked at a moment t2, a largest response value in the first frame of picture (that is, the moment 11) is $y_{t1}$, and a largest response value in the second frame of picture (that is, the moment t2) is $y_{t2}$. Largest response values such as $y_{t1}$, ..., and $y_{t2}$ corresponding to a series of consecutive moments from the moment t1 to the moment t2 are modeled. Then, a parabolic graph may be obtained by using the built model, specifically as shown in FIG. 6.

In a subsequent tracking process, for example, after a largest response value $y_{t3}$ of a picture frame corresponding to a moment t3 in FIG. 6 is obtained, $y_{t3}$ is matched by using the built model. When $y_{t3}$ falls outside a most probable interval of the parabolic graph of the built model, it is considered that the response value $y_{t3}$ in this case does not belong to the model, and it is considered that the tracker drifts at the moment t3. Further, the drift may be corrected. It should be noted that the most probable interval herein may be preset based on a precision requirement for the tracker. For a tracker with a higher precision requirement, values along an x axis on a parabola are closer to a central axis of the parabola.

After detecting that drift is generated during tracking, that is, when the tracking drift result is that drift is generated for the tracking of the target object, the present invention further includes a drift correction method in S 107. The drift correction method includes a coarse-fine search process, and specifically includes the following steps.

S 1071. Obtain a corresponding position in the current frame of picture based on a position of the target object in a previous frame of picture, and establish a plurality of search windows near the corresponding position.

S 1072. Collect samples in each of the plurality of search windows to obtain a sample set corresponding to each search window, and compute a sample response value of each sample in the sample set.

S 1073. Determine, based on top k sample response values in each search window, a target search window in which the target object is most likely to appear, where the top k sample response values are k sample response values that are ranked top in descending order of sample response values.

S 1076. Determine a sampling sample corresponding to a largest sample response value in the target search window as the target object in the current frame of picture.

Optionally, before S 1076, the method may further include the following steps.

S1074. Sample the current frame of picture based on the target search window, to obtain a plurality of sampling samples.

S1075. Separately compute sample response values of the plurality of sampling samples to obtain a plurality of sampling sample response values. Correspondingly, S 1076 may specifically include: determining a sampling sample corresponding to a largest sample response value in the plurality of sampling sample response values as the target object in the current frame of picture. That is, a position of the sampling sample corresponding to the largest sample response value is a target position obtained through correction.

The determining, based on top k sample response values in each search window, a target search window in which the target object is most likely to appear in S1073 includes:
entering the top k sample response values in each search window into a statistical function, to obtain statistical function values of the top k sample response values, and determining, by comparing the statistical function values of the top k sample response values, the target search window in which the target object is most likely to appear.

Specifically, the entering the top k sample response values in each search window into a statistical function, to obtain statistical function values of the top k sample response values, and determining, by comparing the statistical function values of the top k sample response values, the target search window in which the target object is most likely to appear includes:

$$\hat{z}_j = (\arg\max \; or \; \arg\min)_{z_i} \varphi(F_1(z_i),,,,F_k(z_i))$$

where $F_m(.)$ is an m$^{th}$ largest value of response values sorted in descending order in a corresponding response graph $F(.)$, $\varphi(.)$ is a statistical function, and the statistical function may be sum calculation, product calculation, median value calculation, average value calculation, variance calculation (where when the statistical function is variance calculation, a smaller value of the statistical function is preferred), or the like.

The foregoing process of determining the target search window may be considered as a coarse search process. The target search window determined through coarse search is a position at which the target most probably appears. Then fine search, that is, a process of S 1074 and S 1075, is performed on this basis. Sampling is further performed in the target search window, and a sample corresponding to a largest sample response value is determined, where a position of the sample is the position of the target on the current frame of picture. In this way, drift correction is completed, that is, the incorrect target position is corrected to a correct target position. Principles of the sampling and the process of determining the largest sample response value herein are the same as those of the manners used in the foregoing related parts, and details are not described herein again.

In this way, in this embodiment of this application, the drift generated by the tracker in a target tracking process is detected in time by using the drift determining model, and the drift is corrected in time by using a coarse-fine process, thereby ensuring accuracy of the tracker, providing fast and accurate input information for a downstream device of the tracker, so that the downstream device of the tracker can make more accurate determining.

In another embodiment of this application, further, when the tracking drift result is that no drift is generated for the tracking of the target object, the method further includes a model update method in S 108, specifically including: updating the drift determining model based on the tracking drift result.

Further, before the updating the drift determining model based on the tracking drift result, this embodiment of this application may further include the following step:

S 1081. Output the position of the target object in the current frame of picture.

Correspondingly, the updating the drift determining model based on the tracking drift result includes the following step:

S 1082. Update the drift determining model based on the position of the target object in the current frame of picture.

After the position of the target object in the current frame of picture is output in S 1081, the current drift determining model may be updated by using a corresponding function corresponding to information about the position, so that accuracy of drift determining by using the current drift determining model is higher.

Specifically, for example, when the selected initial model is a Gaussian model, an update formula may be:

$$\mu_t = (1-\rho)\mu_{t-1} + \rho y_t;$$

and

$$\sigma_t^2 = (1-\rho)\sigma_{t-1}^2 + \rho(y_t - \mu_t)^2$$

where ($\mu_t$, $\sigma_t^2$) is a model parameter updated for a current frame, ($\mu_{t-1}$, $\sigma_{t-1}^2$) is a model parameter for a previous frame, and $\rho$ is an update weight, and usually may be 0.01. In this application, the weight $\rho$ gradually decreases, and is set to $1/N$, where N is a total quantity of currently tracked frames, and $y_t$ is a largest sample response value of a $t^{th}$ frame of image.

It should be noted that, in this embodiment of this application, an update frequency for updating the model is adjustable. For example, the frequency may be updating the model based on the tracking drift result each time when the tracking drift result is that no drift is generated. Alternatively, the model may be updated based on an accumulated tracking drift result after tracking drift results for several frames are accumulated. The purpose of such processing is: When the update frequency is higher, robustness of the model becomes better after frequent updates. However, frequent updates may consume more computing resources. Therefore, in view of saving computing resources, the update frequency may be adjusted. In this way, update is performed once after a plurality of results are accumulated. That is, in this embodiment of this application, model robustness and computing resource consumption may be balanced based on a specific requirement.

In this embodiment of this application, the drift determining model is updated based on an output result that no drift is generated, so that the drift determining model is adaptive. In addition, a drift detection capability is continuously improved, so that a drift determining (or drift detection) result of the drift determining model is more accurate.

It should be noted that this embodiment of this application is an improvement to the tracker. The target tracking method in this embodiment of this application may be integrated into an existing tracker in a form of a software product, or may be used as an independent module to provide a drift detection and/or drift correction function for an existing tracker. This embodiment of this application is applicable to all types of trackers. Proper basic trackers may be selected based on different tasks, for example, a KCF (Kernelized correlation filte, kernelized correlation filter) tracker, a CT (compressive tracke, compressive tracker), and an STC (Spatio-Temporal Context, spatio-temporal context) tracker. Then, a basic model is further selected to model a historical largest sample response value of a tracker. Common basic models include single Gaussian, Gaussian, and the like. Then, as described above, the basic model is modeled based on a largest sample response value obtained through tracking, that is, a parameter of the basic model is estimated, to complete initialization of the basic model. In a subsequent tracking process, if a tracking result shows that no drift is generated during tracking, the initialized basic model is updated based on the result (where specifically, updating the model is essentially updating the model parameter), and so on. When a tracking result shows that drift is generated during tracking, the drift is corrected by using the drift correction method described in this embodiment of this application.

The method provided in this embodiment of this application is described in detail above with reference to related accompanying drawings. The following describes in detail an apparatus provided in the embodiments of this application with reference to the accompanying drawings.

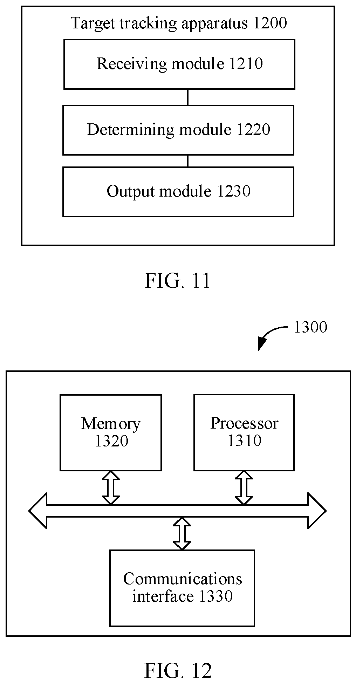

FIG. 11 is a schematic block diagram of a target tracking apparatus according to an embodiment of this application. As shown in FIG. 11, the apparatus 1200 includes a receiving module 1210, a determining module 1220, and an output module 1230.

The receiving module 1210 is configured to receive a current frame of picture, where the current frame of picture includes a target object.

The determining module 1220 is configured to determine, based on a drift determining model, whether a tracker drifts for tracking of the target object in the current frame of picture, where the drift determining model is obtained through modeling based on largest values of responses of samples; the drift determining model is a probability density model; the sample is a training sample used to train the drift determining model, where the training sample is collected from a training picture, and the training picture includes the target object; and the response value of the sample is a probability value of likelihood that the training sample is the target object in the training picture.

The output module 1230 is configured to output a tracking drift result, where the tracking drift result includes: drift is generated for the tracking of the target object, or no drift is generated for the tracking of the target object.

It should be understood that the target tracking apparatus 1200 may correspond to the target tracking method 100 in the embodiments of this application, and the target tracking apparatus 1200 may be configured to perform the target tracking method in FIG. 10. In addition, the modules in the target tracking apparatus 1200 and the foregoing other operations and/or functions are separately intended to implement corresponding procedures of the target tracking method in FIG. 10. Specifically, the receiving module 1210 is configured to perform step 101 in the method 100, the determining module 1220 is configured to perform step 103 in the method 100, and the output module 1230 is configured to perform step 105 in the method 100. A specific process in which each module performs the foregoing corresponding step and a corresponding technical effect have been described in detail in the method 100. For brevity, details are not described herein again.

Optionally, the apparatus further includes a model training module. The model training module is configured to: before the receiving module receives the current frame of picture,

receive a first picture, and provide a target coordinate position in the first picture, where the first picture is the first frame of picture;
receive a second picture, where the second picture and the first picture are continuous on a time axis, determine a corresponding position in the second picture based on the target coordinate position in the first picture, and perform sampling at a periphery of the corresponding position in the second picture, to obtain N test samples, where N is a positive integer greater than 1;
perform feature extraction on each sample in the N test samples, to obtain N feature representations $\{X_1, X_2, ..., X_n, ..., X_N\}$ that are in a one-to-one correspondence with the N test samples, where n represents an $n^{th}$ sample in the N test samples;
input the N feature representations $\{X_1, X_2, ..., X_n, ..., X_N\}$ into a classifier to obtain N response values $\{Y_1, Y_2, ..., Y_n, ..., Y_N\}$ in a one-to-one correspondence with the N feature representations $\{X_1, X_2, ..., X_n, ..., X_N\}$, where $Y_n = wX_n$, w indicates a core value of the classifier, and $Y_n$ is used to indicate a probability value of likelihood that the $n^{th}$ sample is the target object in the second picture; and
perform modeling based on a largest response value $Y_{max}$ in the N response values $\{Y_1, Y_2, ..., Y_n, ..., Y_N\}$, to obtain the drift determining model.

Optionally, the determining module 1220 is specifically configured to:
determine whether a largest sample response value in the current frame of picture falls outside a most probable interval constructed by the drift determining model; and
if yes, determine that drift is generated; or if not, determine that no drift is generated, where the largest sample response value in the current frame of picture is a largest sample response value in a plurality of sample response values corresponding to a plurality of samples sampled in the current frame of picture.

The drift determining model is a probability density model, and the probability density model is usually presented in a form of a probability density function. Therefore, the most probable interval constructed by the drift determining model is specifically a most probable interval constructed by the probability density function. Specifically, the most probable interval is a preset probability interval. That is, when a requirement for determining precision is relatively high, a range of the interval may be set to be narrower, and a sample whose largest response value does not fall within the interval is determined as a sample generating drift. When the requirement for determining precision is not quite high, the range of the interval may be set to be relatively wide.

The apparatus further includes a correction module. When the tracking drift result is that drift is generated for the tracking of the target object, the correction module is configured to:

obtain a corresponding position in the current frame of picture based on a position of the target object in a previous frame of picture, and establish a plurality of search windows near the corresponding position;
collect samples in each of the plurality of search windows to obtain a sample set corresponding to each search window, and computing a sample response value of each sample in the sample set;
determine, based on top k sample response values in each search window, a target search window in which the target object is most likely to appear, where the top k sample response values are k sample response values that are ranked top in descending order of sample response values; and

sample the current frame of picture based on the target search window, to obtain a plurality of sampling samples; and

separately compute sample response values of the plurality of sampling samples to obtain a plurality of sampling sample response values; and determine a sampling sample corresponding to a largest sample response value in the plurality of sampling sample response values as the target object in the current frame of picture.

Specifically, for the determining, based on top k sample response values in each search window, a target search window in which the target object is most likely to appear, the correction module is specifically configured to:

enter the top k sample response values in each search window into a statistical function, to obtain statistical function values of the top k sample response values, and determine, by comparing the statistical function values of the top k sample response values, the target search window in which the target object is most likely to appear.

Specifically, the entering the top k sample response values in each search window into a statistical function, to obtain statistical function values of the top k sample response values, and determining, by comparing the statistical function values of the top k sample response values, the target search window in which the target object is most likely to appear includes:

$$\hat{z}_j = (\arg\max or \arg\min)_{z_i} \varphi(F_1(z_i),,,,F_k(z_i))$$

where $F_m(.)$ is an $m^{th}$ largest value of response values sorted in descending order in a corresponding response graph $F(.)$, $\varphi(.)$ is a statistical function, and the statistical function may be sum calculation, product calculation, median value calculation, average value calculation, variance calculation (where when the statistical function is variance calculation, a smaller value of the statistical function is preferred), or the like.

Optionally, the apparatus further includes an update module. When the tracking drift result is that no drift is generated for the tracking of the target object, the update module is configured to update the drift determining model based on the tracking drift result.

Further, before the drift determining model is updated based on the tracking drift result, this embodiment of this application may further include:

outputting the position of the target object in the current frame of picture.

Correspondingly, the updating the drift determining model based on the tracking drift result includes: updating the drift determining model based on the position of the target object in the current frame of picture.

FIG. 12 is a schematic structural diagram of a tracker according to an example that is useful for understanding the invention but does not form part of it. As shown in FIG. 12, the apparatus 1300 includes a processor 1310, a memory 1320, and a communications interface 1330. The memory 1320 stores an instruction. The processor 1310 is configured to execute the instruction in the memory 1320. When the instruction is executed, the processor 1310 is configured to perform the method provided in the foregoing method embodiment. The processor 1310 is further configured to control the communications interface 1330 to communicate with the outside world.

Specifically, the target tracking apparatus 1300 may correspond to the target tracking method in the embodiments of this application. The target tracking apparatus 1300 may include modules configured to perform the method performed by the target tracking apparatus in the target tracking method 100 in FIG. 11. In addition, the modules in the target tracking apparatus 1300 and the foregoing other operations and/or functions are separately intended to implement corresponding procedures of the target tracking method 100 in FIG. 11. A specific process in which each module performs the foregoing corresponding step and a corresponding technical effect have been described in detail in the method 100. For brevity, details are not described herein again.

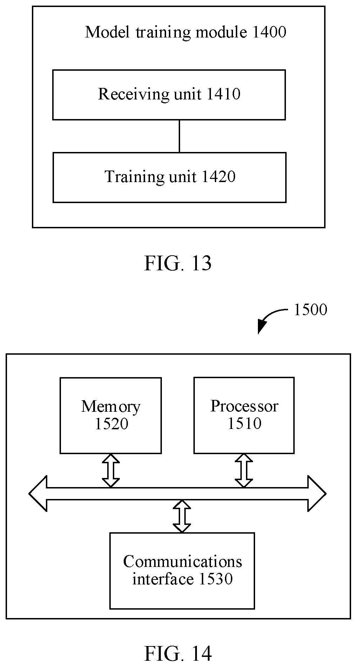

FIG. 13 is a schematic block diagram of a model training apparatus 1400 according to an example that is useful for understanding the invention but does not form part of it. The model training apparatus 1400 is configured to train a drift determining model. As shown in FIG. 13, the apparatus 1400 includes a receiving unit 1410 and a training unit 1420.

It should be understood that the model training apparatus 1400 may correspond to step 102 of the method for training the drift determining model in the embodiments of this application, and the model training apparatus 1400 may include a unit configured to perform step 102 of the method for training the drift determining model. In addition, the modules in the model training apparatus 1400 and the foregoing other operations and/or functions are respectively intended to implement corresponding procedures of step 102 of the model training method. Specifically, the receiving unit 1410 is configured to perform steps S1021 and S1022 in the method S102, the training unit 1420 is configured to perform steps S1023 to S1025 in the method S102. A specific process in which each module performs the foregoing corresponding step and a corresponding technical effect have been described in detail in step S102 in the method 100, for brevity, details are not described herein again.

It should be noted that the model training apparatus 1400 and the model training module described above have a same function in this application. A difference lies in that the model training module may be a functional module in the target tracking apparatus, and may be integrated into the target tracking apparatus to complete a corresponding function, or may be mounted on the target tracking apparatus and is electrically connected to the apparatus to perform model training and to output a drift determining model to the target tracking apparatus. The model training apparatus 1400 may be an apparatus independent of the target tracking apparatus, and has its own processor, memory, and the like. Details are described below.

FIG. 14 is a schematic structural diagram of a model training apparatus according to an example that is useful for understanding the invention but does not form part of it. As shown in FIG. 14, the apparatus 1500 includes a processor 1510, a memory 1520, and a communications interface 1530. The memory 1520 stores an instruction. The processor 1510 is configured to execute the instruction in the memory 1520. When the instruction is executed, the processor 1510 is configured to perform the method provided in the foregoing method embodiment. The processor 1510 is further configured to control the communications interface 1530 to communicate with the outside world.

Specifically, the model training apparatus 1500 may correspond to the model training method S 102 in the embodiments of this application. The model training apparatus 1500 may include modules configured to perform the model training method S102 in the target tracking method 100. In addition, the modules in the model training apparatus 1500 and the foregoing other operations and/or functions are respectively intended to implement corresponding procedures of the model training method S 102. A specific process in which each module performs the foregoing corresponding step and a corresponding technical effect have been described in detail in the method S 102. For brevity, details are not described herein again.

The invention further provides a computer-readable storage medium. The computer-readable storage medium includes a computer program. When the computer program is run on a computer, the computer is enabled to perform the method provided in the foregoing method embodiments.

An example that is useful for understanding the invention but does not form part of it further provides a computer program product including an instruction. When the computer program product is run on a computer, the computer is enabled to perform the method provided in the foregoing method embodiments.

It should be understood that, in the embodiments of this application, the processor may be a central processing unit (central processing unit, CPU), or the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in the embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of random access memories (random access memory, RAM) are available, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

A person of ordinary skill in the art may be aware that, in combination with the examples described in the embodiments disclosed in this specification, modules and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, wherein the implementation does not go beyond the scope of the invention and its embodiments defined by the appended claims.

It may be clearly understood by a person skilled in the art that for the purpose of convenient and brief description, for a detailed working process of the described system, apparatus, and unit, refer to a corresponding process in the foregoing method embodiments. Details are not described herein again.

In the several embodiments provided in this application, it should be understood that the disclosed system, apparatus, and method may be implemented in another manner. For example, the apparatus embodiment described above is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented using some interfaces. The indirect couplings or communication connections between the apparatuses or units may be implemented in electrical, mechanical, or another form.

The modules described as separate parts may or may not be physically separate, and parts displayed as modules may or may not be physical units, may be located in one position, or may be distributed on a plurality of network units. Some or all of the units may be selected based on actual requirements to achieve the objectives of the solutions of the embodiments.

In addition, functional modules in the embodiments of this application may be integrated into one processing module, or each of the modules may exist alone physically, or two or more modules are integrated into one module.

When the functions are implemented in the form of a software functional module and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. The protection scope of this application shall be subject to the protection scope of the claims.

**Claims**

1. A target tracking method carried out by a computer, comprising:

   receiving (S101) a current frame of picture, wherein the current frame of picture comprises a target object;
   determining (S103), based on a drift determining model, whether a tracker drifts for tracking of the target object in the current frame of picture, wherein the drift determining model is a probability density model and obtained through modeling based on largest values of response values of a sample, wherein the sample is a training sample used to train the drift determining model and collected from a training picture that comprises the target object, wherein the response value of the sample is a value indicating a probability that the training sample is the target object in the training picture;
   outputting (S 105) a tracking drift result, wherein the tracking drift result comprises: drift is generated for the tracking of the target object, or no drift is generated for the tracking of the target object;
   the method **characterized in that**,
   when the tracking drift result is that drift is generated for the tracking of the target object, the method further comprises:

   obtaining a corresponding position in the current frame of picture based on a position of the target object in a previous frame of picture, and establishing a plurality of search windows near the corresponding position;
   collecting samples in each of the plurality of search windows to obtain a sample set corresponding to each search window, and computing a sample response value of each sample in the sample set;
   determining, based on top k sample response values in each search window, a target search window in which the target object is most likely to appear, wherein the top k sample response values are k sample response values that are ranked top in descending order of sample response values; and
   determining a sampling sample corresponding to a largest sample response value in the target search window as the target object in the current frame of picture.

2. The method according to claim 1, wherein before the determining, based on a drift determining model, whether a tracker drifts for tracking of the target object in the current frame of picture, the method further comprises:

   receiving a first picture, and providing a target coordinate position in the first picture, wherein the first picture is the first frame of picture;
   receiving a second picture, wherein the second picture and the first picture are continuous on a time axis, determining a corresponding position in the second picture based on the target coordinate position in the first picture, and performing sampling at a periphery of the corresponding position in the second picture, to obtain N test samples, wherein N is a positive integer greater than 1;

performing feature extraction on each sample in the N test samples, to obtain N feature representations $\{X_1, X_2, ..., X_n, ..., X_N\}$ that are in a one-to-one correspondence with the N test samples, wherein n represents an $n^{th}$ sample in the N test samples;

inputting the N feature representations $\{X_1, X_2, ..., X_n, ..., X_N\}$ into a classifier to obtain N response values $\{Y_1, Y_2, ..., Y_n, ..., Y_N\}$ in a one-to-one correspondence with the N feature representations $\{X_1, X_2, ..., X_n, ..., X_N\}$, wherein $Y_n=wX_n$, w indicates a core value of the classifier, and $Y_n$ is used to indicate a probability value of likelihood that the $n^{th}$ sample is the target object in the second picture; and

performing modeling based on a largest response value $Y_{max}$ in the N response values $\{Y_1, Y_2, ..., Y_n, ..., Y_N\}$, to obtain the drift determining model.

3. The method according to claim 1 or 2, wherein the determining, based on a drift determining model, whether a tracker drifts for tracking of the target object in the current frame of picture comprises: determining whether a largest sample response value in the current frame of picture falls outside a most probable interval constructed by the drift determining model; and if yes, determining that drift is generated; or if not, determining that no drift is generated, wherein the largest sample response value in the current frame of picture is a largest sample response value in a plurality of sample response values corresponding to a plurality of samples sampled in the current frame of picture.

4. The method according to claim 1, wherein before the determining a sampling sample corresponding to a largest sample response value in the target search window as the target object in the current frame of picture, the method further comprises:

sampling the current frame of picture based on the target search window, to obtain a plurality of sampling samples; and

separately computing sample response values of the plurality of sampling samples to obtain a plurality of sampling sample response values.

5. The method according to claim 1 or 4, wherein the determining, based on top k sample response values in each search window, a target search window in which the target object is most likely to appear comprises:

entering the top k sample response values in each search window into a statistical function, to obtain statistical function values of the top k sample response values, and determining, by comparing the statistical function values of the top k sample response values, the target search window in which the target object is most likely to appear.

6. The method according to any one of claims 1 to 3, wherein when the tracking drift result is that no drift is generated for the tracking of the target object, the method further comprises: updating the drift determining model based on the tracking drift result.

7. A target tracking apparatus, wherein the apparatus comprises:

a receiving module (1210), configured to receive a current frame of picture, wherein the current frame of picture comprises a target object;

a determining module (1220), configured to determine, based on a drift determining model, whether a tracker drifts for tracking of the target object in the current frame of picture, wherein the drift determining model is a probability model and obtained through modeling based on largest values of response values of a sample, wherein the sample is a training sample used to train the drift determining model and collected from a training picture that comprises the target object, wherein the response value of the sample is a value indicating a probability that the training sample is the target object in the training picture;

an output module (1230), configured to output a tracking drift result, wherein the tracking drift result comprises: drift is generated for the tracking of the target object, or no drift is generated for the tracking of the target object;

the apparatus **characterized in that**

the apparatus further comprises a correction module, and when the tracking drift result is that drift is generated for the tracking of the target object, the correction module is configured to:

obtain a corresponding position in the current frame of picture based on a position of the target object in a previous frame of picture, and establish a plurality of search windows near the corresponding position;

collect samples in each of the plurality of search windows to obtain a sample set corresponding to each search window, and computing a sample response value of each sample in the sample set;

determine, based on top k sample response values in each search window, a target search window in which the target object is most likely to appear, wherein the top k sample response values are k sample response values that are ranked top in descending order of sample response values; and

determine a sampling sample corresponding to a largest sample response value in the target search window as the target object in the current frame of picture.

8. The apparatus according to claim 7, wherein the apparatus further comprises a model training module, and the model training module is configured to: before the receiving module receives the current frame of picture,

receive a first picture, and provide a target coordinate position in the first picture, wherein the first picture is the first frame of picture;

receive a second picture, wherein the second picture and the first picture are continuous on a time axis, determine a corresponding position in the second picture based on the target coordinate position in the first picture, and perform sampling at a periphery of the corresponding position in the second picture, to obtain N test samples, wherein N is a positive integer greater than 1;

perform feature extraction on each sample in the N test samples, to obtain N feature representations $\{X_1, X_2, ..., X_n, ..., X_N\}$ that are in a one-to-one correspondence with the N test samples, wherein n represents an $n^{th}$ sample in the N test samples;

input the N feature representations $\{X_1, X_2, ..., X_n, ..., X_N\}$ into a classifier to obtain N response values $\{Y_1, Y_2, ..., Y_n, ..., Y_N\}$ in a one-to-one correspondence with the N feature representations $\{X_1, X_2, ..., X_n, ..., X_N\}$, wherein $Y_n=wX_n$, w indicates a core value of the classifier, and $Y_n$ is used to indicate a probability value of likelihood that the $n^{th}$ sample is the target object in the second picture; and

perform modeling based on a largest response value $Y_{max}$ in the N response values $\{Y_1, Y_2, ..., Y_n, ..., Y_N\}$, to obtain the drift determining model.

9. The apparatus according to claim 7 or 8, wherein the determining module is specifically configured to: determine whether a largest sample response value in the current frame of picture falls outside a most probable interval constructed by the drift determining model; and if yes, determine that drift is generated; or if not, determine that no drift is generated, wherein the largest sample response value in the current frame of picture is a largest sample response value in a plurality of sample response values corresponding to a plurality of samples sampled in the current frame of picture.

10. The apparatus according to claim 7, wherein the correction module is configured to: before determining the sampling sample corresponding to the largest sample response value in the target search window as the target object in the current frame of picture,

sample the current frame of picture based on the target search window, to obtain a plurality of sampling samples; and separately compute sample response values of the plurality of sampling samples to obtain a plurality of sampling sample response values.

11. The apparatus according to claim 7 or 10, wherein with respect to the determining, based on top k sample response values in each search window, a target search window in which the target object is most likely to appear, the correction module is specifically configured to: enter the top k sample response values in each search window into a statistical function, to obtain statistical function values of the top k sample response values, and determine, by comparing the statistical function values of the top k sample response values, the target search window in which the target object is most likely to appear.

12. The apparatus according to any one of claims 7 to 9, wherein the apparatus further comprises an update module, and when the tracking drift result is that no drift is generated for the tracking of the target object, the update module is configured to: update the drift determining model based on the tracking drift result.

13. A computer-readable storage medium, wherein the computer-readable storage medium stores a computer program comprising instructions which, when the program is executed by a computer, cause the computer to perform the target tracking method according to any one of claims 1 to 6.

**Patentansprüche**

1. Zielverfolgungsverfahren, das durch einem Computer ausgeführt wird, das Folgendes umfasst:

Empfangen (S101) eines aktuellen Bildrahmens, wobei der aktuelle Bildrahmen ein Zielobjekt umfasst;
Bestimmen (S103), basierend auf einem Driftbestimmungsmodell, ob ein Verfolger zum Verfolgen des Zielobjekts in dem aktuellen Bildrahmen driftet, wobei das Driftbestimmungsmodell ein Wahrscheinlichkeitsdichtemodell ist und über Modellieren basierend auf den größten Werten von Antwortwerten einer Probe erhalten wird, wobei die Probe eine Trainingsprobe ist, die verwendet wird, um das Driftbestimmungsmodell zu trainieren und aus einem Trainingsbild zu sammeln, das das Zielobjekt umfasst, wobei der Antwortwert der Probe ein Wert ist, der eine Wahrscheinlichkeit angibt, dass die Trainingsprobe das Zielobjekt in dem Trainingsbild ist:

Ausgeben (S105) eines Verfolgungsdriftergebnisses, wobei das Verfolgungsdriftergebnis Folgendes umfasst: eine Drift für das Verfolgen des Zielobjekts erzeugt wird oder keine Drift für das Verfolgen des Zielobjekts erzeugt wird;
wobei das Verfahren **dadurch gekennzeichnet ist, dass,**
wenn das Verfolgungsdriftergebnis ist, dass die Drift für das Verfolgen des Zielobjekts erzeugt wird, das Verfahren ferner Folgendes umfasst:

Erhalten einer entsprechenden Position in dem aktuellen Bildrahmen basierend auf einer Position des Zielobjekts in einem vorhergehenden Bildrahmen und Einrichten einer Vielzahl von Suchfenstern in der Nähe der entsprechenden Position;
Sammeln von Proben in jedem der Vielzahl von Suchfenstern, um einen Probensatz zu erhalten, der jedem Suchfenster entspricht, und Berechnen eines Probenantwortwerts jeder Probe in dem Probensatz;
Bestimmen basierend auf den obersten k-Probenantwortwerten in jedem Suchfenster, eines Zielsuchfensters, in dem das Zielobjekt am wahrscheinlichsten erscheint, wobei die obersten k-Probenantwortwerte k-Probenantwortwerte sind, die in absteigender Reihenfolge der Probenantwortwerte als oberste eingeordnet sind; und
Bestimmen einer Probenahmeprobe, die einem größten Probenantwortwert in dem Zielsuchfenster als das Zielobjekt in dem aktuellen Bildrahmen entspricht.

2. Verfahren nach Anspruch 1, wobei, vor dem Bestimmen, basierend auf einem Driftbestimmungsmodell, ob ein Verfolger zum Verfolgen des Zielobjekts in dem aktuellen Bildrahmen driftet, das Verfahren ferner Folgendes umfasst:

Empfangen eines ersten Bilds und Bereitstellen einer Zielkoordinatenposition in dem ersten Bild, wobei das erste Bild der erste Bildrahmen ist;
Empfangen eines zweiten Bilds, wobei das zweite Bild und das erste Bild auf einer Zeitachse kontinuierlich sind, Bestimmen einer entsprechenden Position in dem zweiten Bild basierend auf der Zielkoordinatenposition in dem ersten Bild und Durchführen einer Probenahme an einem Rand der entsprechenden Position in das zweite Bild, um N Testproben zu erhalten, wobei N eine positive ganze Zahl größer als 1 ist;
Durchführen einer Merkmalsextraktion auf jeder Probe in den N Testproben, um N Merkmalsdarstellungen $\{X_1, X_2, ..., X_n, ..., X_N\}$ zu erhalten, die in einer Eins-zu-Eins-Entsprechung zu den N Testproben stehen, wobei n eine $n^{-te}$ Probe in den N Testproben darstellt;
Eingeben der N Merkmalsdarstellungen $\{X_1, X_2, ..., X_n, ..., X_N\}$ in einen Klassifizierer, um N Antwortwerte $\{Y_1, Y_2, ..., Y_n, ..., Y_N\}$ in einer Eins-zu-Eins-Entsprechung mit den N Merkmalsdarstellungen $\{X_1, X_2, ..., X_n, ..., X_N\}$ zu erhalten, wobei $Y_n=wX_n$, w einen Kernwert des Klassifizierers angibt, und $Y_n$ verwendet wird, um einen Wahrscheinlichkeitswert einer Wahrscheinlichkeit anzuzeigen, dass die $n^{-te}$ Probe das Zielobjekt in dem zweiten Bild ist; und
Durchführen des Modellierens basierend auf einem größten Antwortwert $Y_{max}$ in den N Antwortwerten $\{Y_1, Y_2, ..., Y_n, ..., Y_N\}$, um das Driftbestimmungsmodell zu erhalten.

3. Verfahren nach Anspruch 1 oder 2, wobei das Bestimmen, basierend auf einem Driftbestimmungsmodell, ob ein Verfolger zum Verfolgen des Zielobjekts in dem aktuellen Bildrahmen driftet, Folgendes umfasst:
Bestimmen, ob ein größter Probenantwortwert in dem aktuellen Bildrahmen außerhalb eines wahrscheinlichsten Intervalls liegt, das durch das Driftbestimmungsmodell konstruiert wird; und falls ja, Bestimmen, dass eine Drift erzeugt wird; oder falls nicht, Bestimmen, dass keine Drift erzeugt wird, wobei der größte Probenantwortwert in dem aktuellen Bildrahmen ein größter Probenantwortwert in einer Vielzahl von Probenantwortwerten ist, die einer Vielzahl von Probenwerten entspricht, die in dem aktuellen Bildrahmen abgetastet wird.

4. Verfahren nach Anspruch 1, wobei, vor dem Bestimmen einer Probenahmeprobe, die einem größten Probenantwortwert in dem Zielsuchfenster als das Zielobjekt in dem aktuellen Bildrahmen entspricht, das Verfahren ferner Folgendes umfasst:

Nehmen einer Probe des aktuellen Bildrahmens basierend auf dem Zielsuchfenster, um eine Vielzahl von Probenahmeprobenwerten zu erhalten; und
getrenntes Berechnen von Probenantwortwerten der Vielzahl von Probenahmeproben, um eine Vielzahl von Probenahmeprobenantwortwerten zu erhalten.

5. Verfahren nach Anspruch 1 oder 4, wobei das Bestimmen, basierend auf den obersten k-Probenantwortwerten in jedem Suchfenster, eines Zielsuchfensters, in dem das Zielobjekt am wahrscheinlichsten erscheint, Folgendes umfasst: Eingeben der obersten k-Probenantwortwerte in jedem Suchfenster in eine statistische Funktion, um statistische Funktionswerte der obersten k-Probenantwortwerte zu erhalten, und Bestimmen, durch Vergleichen der statistischen Funktionswerte der obersten k-Probenantwortwerte, des Zielsuchfensters, in dem das Zielobjekt am wahrscheinlichsten erscheint.

6. Verfahren nach einem der Ansprüche 1 bis 3, wobei, wenn das Verfolgungsdriftergebnis ist, dass keine Drift für das Verfolgen des Zielobjekts erzeugt wird, das Verfahren ferner Folgendes umfasst: Aktualisieren des Driftbestimmungsmodells basierend auf dem Verfolgungsdriftergebnis.

7. Zielverfolgungseinrichtung, wobei die Einrichtung Folgendes umfasst:

ein Empfangsmodul (1210), das konfiguriert ist, um einen aktuellen Bildrahmen zu empfangen, wobei der aktuelle Bildrahmen ein Zielobjekt umfasst;

ein Bestimmungsmodul (1220), das konfiguriert ist, um, basierend auf einem Driftbestimmungsmodell, zu bestimmen, ob ein Verfolger zum Verfolgen des Zielobjekts in dem aktuellen Bildrahmen driftet, wobei das Driftbestimmungsmodell ein Wahrscheinlichkeitsmodell ist und über Modellieren basierend auf den größten Werten von Antwortwerten einer Probe erhalten wird, wobei die Probe eine Trainingsprobe ist, die verwendet wird, um das Driftbestimmungsmodell zu trainieren und aus einem Trainingsbild zu sammeln, das das Zielobjekt umfasst, wobei der Antwortwert der Probe ein Wert ist, der eine Wahrscheinlichkeit angibt, dass die Trainingsprobe das Zielobjekt in dem Trainingsbild ist;

ein Ausgabemodul (1230), das konfiguriert ist, um ein Verfolgungsdriftergebnis auszugeben, wobei das Verfolgungsdriftergebnis Folgendes umfasst: eine Drift für das Verfolgen des Zielobjekts erzeugt wird oder keine Drift für das Verfolgen des Zielobjekts erzeugt wird;

wobei die Einrichtung **dadurch gekennzeichnet ist, dass** die Einrichtung ferner ein Korrekturmodul umfasst, und wenn das Verfolgungsdriftergebnis ist, dass die Drift für das Verfolgen des Zielobjekts erzeugt wird, das Korrekturmodul für Folgendes konfiguriert ist:

Erhalten einer entsprechenden Position in dem aktuellen Bildrahmen basierend auf einer Position des Zielobjekts in einem vorhergehenden Bildrahmen und Einrichten einer Vielzahl von Suchfenstern in der Nähe der entsprechenden Position;

Sammeln von Proben in jedem der Vielzahl von Suchfenstern, um einen Probensatz zu erhalten, der jedem Suchfenster entspricht, und Berechnen eines Probenantwortwerts jeder Probe in dem Probensatz;

Bestimmen basierend auf den obersten k-Probenantwortwerten in jedem Suchfenster, eines Zielsuchfensters, in dem das Zielobjekt am wahrscheinlichsten erscheint, wobei die obersten k-Probenantwortwerte k-Probenantwortwerte sind, die in absteigender Reihenfolge der Probenantwortwerte als oberste eingeordnet sind; und

Bestimmen einer Probenahmeprobe, die einem größten Probenantwortwert in dem Zielsuchfenster als das Zielobjekt in dem aktuellen Bildrahmen entspricht.

8. Einrichtung nach Anspruch 7, wobei die Einrichtung ferner ein Modelltrainingsmodul umfasst und das Modelltrainingsmodul für Folgendes konfiguriert ist: bevor das Empfangsmodul den aktuellen Bildrahmen empfängt,

Empfangen eines ersten Bilds und Bereitstellen einer Zielkoordinatenposition in dem ersten Bild, wobei das erste Bild der erste Bildrahmen ist;

Empfangen eines zweiten Bilds, wobei das zweite Bild und das erste Bild auf einer Zeitachse kontinuierlich sind, Bestimmen einer entsprechenden Position in dem zweiten Bild basierend auf der Zielkoordinatenposition in dem ersten Bild und Durchführen der Probenahme an einem Rand der entsprechenden Position in das zweite Bild, um N Testproben zu erhalten, wobei N eine positive ganze Zahl größer als 1 ist;

Durchführen der Merkmalsextraktion auf jeder Probe in den N Testproben, um N Merkmalsdarstellungen $\{X_1, X_2, ..., X_n, ..., X_N\}$ zu erhalten, die in einer Eins-zu-Eins-Entsprechung zu den N Testproben stehen, wobei n eine $n^{te}$ Probe in den N Testproben darstellt;

Eingeben der N Merkmalsdarstellungen $\{X_1, X_2, ..., X_n, ..., X_N\}$ in einen Klassifizierer, um N Antwortwerte $\{Y_1, Y_2, ..., Y_n, ..., Y_N\}$ in einer Eins-zu-Eins-Entsprechung mit den N Merkmalsdarstellungen $\{X_1, X_2, ..., X_n, ..., X_N\}$ zu erhalten, wobei $Y_n = wX_n$, w einen Kernwert des Klassifizierers angibt, und $Y_n$ verwendet wird, um einen Wahrscheinlichkeitswert der Wahrscheinlichkeit anzuzeigen, dass die $n^{te}$ Probe das Zielobjekt in dem zweiten Bild ist; und

Durchführen des Modellierens basierend auf einem größten Antwortwert $Y_{max}$ in den N Ant-

wortwerten $\{Y_1, Y_2, ..., Y_n, ..., Y_N\}$, um das Driftbestimmungsmodell zu erhalten.

9. Einrichtung nach Anspruch 7 oder 8, wobei das Bestimmungsmodul speziell für Folgendes konfiguriert ist:
Bestimmen, ob ein größter Probenantwortwert in dem aktuellen Bildrahmen außerhalb eines wahrscheinlichsten Intervalls liegt, das durch das Driftbestimmungsmodell konstruiert wird; und falls ja, Bestimmen, dass eine Drift erzeugt wird; oder falls nicht, Bestimmen, dass keine Drift erzeugt wird, wobei der größte Probenantwortwert in dem aktuellen Bildrahmen ein größter Probenantwortwert in einer Vielzahl von Probenantwortwerten ist, die einer Vielzahl von Probenwerten entspricht, die in dem aktuellen Bildrahmen abgetastet wird.

10. Einrichtung nach Anspruch 7, wobei das Korrekturmodul für Folgendes konfiguriert ist: vor dem Bestimmen der Probenahmeprobe, die dem größten Probenantwortwert in dem Zielsuchfenster als das Zielobjekt in dem aktuellen Bildrahmen entspricht,

Nehmen der Probe des aktuellen Bildrahmens basierend auf dem Zielsuchfenster, um eine Vielzahl von Probenahmeprobenwerten zu erhalten; und
getrenntes Berechnen von Probenantwortwerten der Vielzahl von Probenahmeproben, um eine Vielzahl von Probenahmeprobenantwortwerten zu erhalten.

11. Einrichtung nach Anspruch 7 oder 10, wobei hinsichtlich des Bestimmens, basierend auf den obersten k-Probenantwortwerten in jedem Suchfenster, eines Zielsuchfensters, in dem das Zielobjekt am wahrscheinlichsten erscheint, das speziell für Folgendes konfiguriert ist:
Eingeben der obersten k-Probenantwortwerte in jedem Suchfenster in eine statistische Funktion, um statistische Funktionswerte der obersten k-Probenantwortwerte zu erhalten, und Bestimmen, durch Vergleichen der statistischen Funktionswerte der obersten k-Probenantwortwerte, des Zielsuchfensters, in dem das Zielobjekt am wahrscheinlichsten erscheint.

12. Einrichtung nach einem der Ansprüche 7 bis 9, wobei die Einrichtung ferner ein Aktualisierungsmodul umfasst, und wenn das Verfolgungsdriftergebnis ist, dass keine Drift für das Verfolgen des Zielobjekts erzeugt wird, das Aktualisierungsmodul für Folgendes konfiguriert ist:
Aktualisieren des Driftbestimmungsmodells basierend auf dem Verfolgungsdriftergebnis.

13. Computerlesbares Speichermedium, wobei das computerlesbare Speichermedium ein Computerprogramm speichert, umfassend Anweisungen, die, wenn das Programm durch einen Computer ausgeführt wird, den Computer veranlassen, das Zielverfolgungsverfahren nach einem der Ansprüche 1 bis 6 durchführen.

**Revendications**

1. Procédé de suivi de cible mis en oeuvre par un ordinateur, comprenant :

la réception (S101) d'une trame d'image actuelle, la trame d'image actuelle comprenant un objet cible ;
la détermination (S103), sur la base d'un modèle de détermination de dérive, du fait de savoir si un dispositif de suivi dérive pour suivre l'objet cible dans la trame d'image actuelle, le modèle de détermination de dérive étant un modèle de densité de probabilité et
obtenu par modélisation basée sur les valeurs les plus élevées des valeurs de réponse d'un échantillon, l'échantillon étant un échantillon de formation utilisé pour former le modèle de détermination de dérive et collecté à partir d'une image de formation qui comprend l'objet cible, la valeur de réponse de l'échantillon étant une valeur indiquant une probabilité que l'échantillon de formation soit l'objet cible dans l'image de formation :

l'émission en sortie (S105) d'un résultat de dérive de suivi, le résultat de dérive de suivi comprenant : une dérive générée pour le suivi de l'objet cible, ou aucune dérive n'est générée pour le suivi de l'objet cible ;
le procédé **caractérisé en ce que**,
lorsque le résultat de la dérive de suivi signifie que la dérive est générée pour le suivi de l'objet cible, le procédé comprend en outre :

l'obtention d'une position correspondante dans la trame d'image actuelle sur la base d'une position de l'objet cible dans une trame d'image précédente, et l'établissement d'une pluralité de fenêtres de recherche à proximité de la position correspondante ;
la collecte des échantillons dans chacune de la pluralité de fenêtres de recherche pour obtenir un ensemble d'échantillons correspondant à chaque fenêtre de recherche, et le calcul d'une valeur de réponse d'échantillon de chaque échantillon dans l'ensemble d'échantillons ;

la détermination, sur la base des k valeurs de réponse d'échantillon les plus élevées dans chaque fenêtre de recherche, d'une fenêtre de recherche cible dans laquelle l'objet cible est le plus susceptible d'apparaître, les k valeurs de réponse d'échantillon les plus élevées étant k valeurs de réponse d'échantillon qui sont classées au plus haut par ordre décroissant des valeurs de réponse de l'échantillon ; et

la détermination d'un échantillon d'échantillonnage correspondant à une plus grande valeur de réponse d'échantillon dans la fenêtre de recherche cible en tant qu'objet cible dans la trame d'image actuelle.

2. Procédé selon la revendication 1, avant de déterminer, sur la base d'un modèle de détermination de dérive, si un dispositif de suivi dérive pour suivre l'objet cible dans la trame d'image actuelle, le procédé comprend en outre :

la réception d'une première image et la fourniture d'une position de coordonnées cible dans la première image, la première image étant la première trame d'image ;

la réception d'une seconde image, la seconde image et la première image étant continues sur un axe temporel, la détermination d'une position correspondante dans la seconde image sur la base de la position de coordonnées cible dans la première image, et la réalisation d'un échantillonnage à la périphérie de la position correspondante dans la seconde image, pour obtenir N échantillons de test, N étant un entier positif supérieur à 1 ;

la réalisation d'une extraction de caractéristiques sur chaque échantillon des N échantillons de test, pour obtenir N représentations de caractéristiques $\{X_1, X_2, ..., X_n, ..., X_N\}$ qui sont en correspondance biunivoque avec les N échantillons de test, n représentant un $n^{\text{ème}}$ échantillon parmi les N échantillons de test ;

la saisie des N représentations de caractéristiques $\{X_1, X_2, ..., X_n, ..., X_N\}$ dans un classificateur pour obtenir N valeurs de réponse $\{Y_1, Y_2, ..., Y_n, ..., Y_N\}$ dans une correspondance biunivoque avec les N représentations de caractéristiques $\{X_1, X_2, ..., X_n, ..., X_N\}$, $Y_n = wX_n$, w indiquant une valeur centrale du classificateur, et $Y_n$ étant utilisé pour indiquer une valeur de probabilité de vraisemblance que le $n^{\text{ème}}$ échantillon est l'objet cible dans la seconde image ; et

la réalisation d'une modélisation sur la base d'une plus grande valeur de réponse $Y_{max}$ dans les N valeurs de réponse $\{Y_1, Y_2, ..., Y_n, ..., Y_N\}$, pour obtenir le modèle de détermination de dérive.

3. Procédé selon la revendication 1 ou 2, la détermination, sur la base d'un modèle de détermination de dérive, du fait de savoir si un dispositif de suivi dérive pour suivre l'objet cible dans la trame d'image actuelle comprenant :

la détermination du fait de savoir si une valeur de réponse d'échantillon la plus grande dans la trame d'image actuelle se situe en dehors d'un intervalle le plus probable construit par le modèle de détermination de dérive ; et si oui, la détermination que la dérive est générée ; ou sinon, la détermination qu'aucune dérive n'est générée, la plus grande valeur de réponse d'échantillon dans la trame d'image actuelle étant une valeur de réponse d'échantillon la plus grande dans une pluralité de valeurs de réponse d'échantillon correspondant à une pluralité d'échantillons échantillonnés dans la trame d'image actuelle.

4. Procédé selon la revendication 1, avant la détermination d'un échantillon d'échantillonnage correspondant à une plus grande valeur de réponse d'échantillon dans la fenêtre de recherche cible en tant qu'objet cible dans la trame d'image actuelle, le procédé comprenant en outre :

l'échantillonnage de la trame d'image actuelle sur la base de la fenêtre de recherche cible, pour obtenir une pluralité d'échantillons d'échantillonnage ; et

le calcul séparé des valeurs de réponse d'échantillon de la pluralité d'échantillons d'échantillonnage pour obtenir une pluralité de valeurs de réponse d'échantillon d'échantillonnage.

5. Procédé selon la revendication 1 ou 4, la détermination, sur la base des k valeurs de réponse d'échantillon les plus élevées dans chaque fenêtre de recherche, d'une fenêtre de recherche cible dans laquelle l'objet cible est le plus susceptible d'apparaître comprenant :

l'entrée de k valeurs de réponse d'échantillon les plus élevées dans chaque fenêtre de recherche dans une fonction statistique, pour obtenir les valeurs de fonction statistique des k valeurs de réponse d'échantillon les plus élevées, et la détermination, en comparant les valeurs de fonction statistiques des k valeurs de réponse d'échantillon les plus élevées, de la fenêtre de recherche cible dans laquelle l'objet cible est le plus susceptible d'apparaître.

6. Procédé selon l'une quelconque des revendications 1 à 3, lorsque le résultat de dérive de suivi est qu'aucune dérive n'est générée pour le suivi de l'objet cible, le procédé comprenant en outre : la mise à jour du modèle de détermination de dérive sur la base du résultat de dérive de suivi.

7. Appareil de suivi de cible, l'appareil comprenant :

un module de réception (1210), configuré pour recevoir une trame d'image actuelle, la trame d'image actuelle comprenant un objet cible ; un module de détermination (1220), configuré pour déterminer, sur la base d'un modèle de détermination de dérive, si un dispositif de suivi dérive pour suivre l'objet cible dans la trame d'image actuelle, le modèle de détermination de dérive étant un modèle de probabilité et obtenu par modélisation basée sur les plus grandes valeurs de valeurs de réponse d'un échantillon, l'échantillon étant un échantillon de formation utilisé pour former le modèle de détermination de dérive et collecté à partir d'une image de formation qui comprend l'objet cible, la valeur de réponse de l'échantillon étant une valeur indiquant une probabilité que l'échantillon de formation est l'objet cible dans l'image de formation ; un module d'émission en sortie (1230), configuré pour émettre en sortie un résultat de dérive de suivi, le résultat de dérive de suivi comprenant : une dérive générée pour le suivi de l'objet cible, ou aucune dérive n'est générée pour le suivi de l'objet cible ; l'appareil **caractérisé en ce que** l'appareil comprend en outre un module de correction, et lorsque le résultat de la dérive de suivi signifie que la dérive est générée pour le suivi de l'objet cible, le module de correction est configuré pour :

obtenir une position correspondante dans la trame d'image actuelle sur la base d'une position de l'objet cible dans une trame d'image précédente, et établir une pluralité de fenêtres de recherche à proximité de la position correspondante ; collecter des échantillons dans chacune de la pluralité de fenêtres de recherche pour obtenir un ensemble d'échantillons correspondant à chaque fenêtre de recherche, et calculer une valeur de réponse d'échantillon de chaque échantillon dans l'ensemble d'échantillons ; déterminer, sur la base des k valeurs de réponse d'échantillon les plus élevées dans chaque fenêtre de recherche, une fenêtre de recherche cible dans laquelle l'objet cible est le plus susceptible d'apparaître, les k valeurs de réponse d'échantillon les plus élevées étant k valeurs de réponse d'échantillon qui sont classées au plus haut par ordre décroissant des valeurs de réponse de l'échantillon ; et déterminer un échantillon d'échantillonnage correspondant à une plus grande valeur de réponse d'échantillon dans la fenêtre de recherche cible en tant qu'objet cible dans la trame d'image actuelle.

8. Appareil selon la revendication 7, l'appareil comprenant en outre un module de formation de modèle, et le module de formation de modèle est configuré pour : avant que le module de réception ne reçoive la trame d'image actuelle,

recevoir une première image et fournir une position de coordonnées cible dans la première image, la première image étant la première trame d'image ; recevoir une seconde image, la seconde image et la première image étant continues sur un axe temporel, déterminer une position correspondante dans la seconde image sur la base de la position de coordonnées cible dans la première image et réaliser un échantillonnage à la périphérie de la position correspondante dans la seconde image, pour obtenir N échantillons de test, N étant un entier positif supérieur à 1 ; réaliser une extraction de caractéristiques sur chaque échantillon des N échantillons de test, pour obtenir N représentations de caractéristiques $\{X_1, X_2, ..., X_n, ..., X_N\}$ qui sont en correspondance biunivoque avec les N échantillons de test, n représentant un $n^{\text{ème}}$ échantillon parmi les N échantillons de test ; saisir les N représentations de caractéristiques $\{X_1, X_2, ..X_n, ..., X_N\}$ dans un classificateur pour obtenir N valeurs de réponse $\{Y_1, Y_2, Y_n, ..., Y_N\}$ en correspondance biunivoque avec les N représentations de caractéristiques $\{X_1, X_2, X_n, ..., X_N\}$, $Y_n = wX_n$, w indiquant une valeur centrale du classificateur, et $Y_n$ étant utilisé pour indiquer une valeur de probabilité de vraisemblance que le $n^{\text{ème}}$ échantillon est l'objet cible dans la seconde image ; et réaliser une modélisation sur la base d'une plus grande valeur de réponse $Y_{max}$ dans les N valeurs de réponse $\{Y_1, Y_2, ..., Y_n, ..., Y_N\}$, pour obtenir le modèle de détermination de dérive.

9. Appareil selon la revendication 7 ou 8, le module de détermination étant spécifiquement configuré pour : déterminer si une valeur de réponse d'échantillon la plus grande dans la trame d'image actuelle se situe en dehors d'un intervalle le plus probable construit par le modèle de détermination de dérive ; et si oui, déterminer que la dérive est générée ; ou sinon, déterminer qu'aucune dérive n'est générée, la plus grande valeur de réponse d'échantillon dans la trame d'image actuelle étant une valeur de réponse d'échantillon la plus grande dans une pluralité de valeurs de réponse d'échantillon correspondant à une pluralité d'échantillons échantillonnés dans la trame d'image actuelle.

10. Appareil selon la revendication 7, le module de correction étant configuré pour : avant de déterminer l'échantillon d'échantillonnage correspondant à la plus grande valeur de réponse d'échantillon dans la fenêtre de recherche cible en tant qu'objet cible dans la trame d'image actuelle,

échantillonner la trame d'image actuelle sur la base de la fenêtre de recherche cible, pour obtenir une pluralité d'échantillons d'échantillonnage ; et
calculer séparément les valeurs de réponse d'échantillon de la pluralité d'échantillons d'échantillonnage pour obtenir une pluralité de valeurs de réponse d'échantillon d'échantillonnage.

11. Appareil selon la revendication 7 ou 10, par rapport à la détermination, sur la base des k valeurs de réponse d'échantillon les plus élevées dans chaque fenêtre de recherche, d'une fenêtre de recherche cible dans laquelle l'objet cible est le plus susceptible d'apparaître, le module de correction étant spécifiquement configuré pour : saisir les k valeurs de réponse d'échantillon les plus élevées dans chaque fenêtre de recherche dans une fonction statistique, pour obtenir les valeurs de fonction statistique des k valeurs de réponse d'échantillon les plus élevées, et déterminer, en comparant les valeurs de fonction statistiques des k valeurs de réponse d'échantillon les plus élevées, la fenêtre de recherche cible dans lequel l'objet cible est le plus susceptible d'apparaître.

12. Appareil selon l'une quelconque des revendications 7 à 9, l'appareil comprenant en outre un module de mise à jour, et lorsque le résultat de dérive de suivi signifie qu'aucune dérive n'est générée pour le suivi de l'objet cible, le module de mise à jour est configuré pour : mettre à jour le modèle de détermination de dérive sur la base du résultat de dérive de suivi.

13. Support de stockage lisible par ordinateur, le support de stockage lisible par ordinateur stockant un programme informatique comprenant des instructions qui, lorsque le programme est exécuté par un ordinateur, amènent l'ordinateur à réaliser le procédé de suivi de cible selon l'une quelconque des revendications 1 à 6.

FIG. 1

FIG. 2

FIG. 3

FIG. 4

FIG. 5

FIG. 6

FIG. 7

| Video reading | → | Target detection | → | Target tracking | → | Visual ranging | → | Multi-sensor fusion | → | Planning and control |
|---|---|---|---|---|---|---|---|---|---|---|

FIG. 8

| Video reading | → | Target detection | → | Target classification | → | Target tracking | → | Exception detection / Identity recognition / Video understanding | → | Alarm intervention |
|---|---|---|---|---|---|---|---|---|---|---|

FIG. 9

| Receive a current frame of picture, where the current frame of picture includes a target object | 101 |
|---|---|
| Determine, based on a drift determining model, whether a tracker drifts for tracking of the target object in the current frame of picture, where the drift determining model is obtained through modeling based on largest values of responses of samples, and the drift determining model is a probability density model | 103 |
| Output a tracking drift result, where the tracking drift result includes: drift is generated for the tracking of the target object, or no drift is generated for the tracking of the target object | 105 |

FIG. 10

Target tracking apparatus 1200

Receiving module 1210

Determining module 1220

Output module 1230

FIG. 11

1300

Memory
1320

Processor
1310

Communications
interface 1330

FIG. 12

Model training module 1400

Receiving unit 1410

Training unit 1420

FIG. 13

1500

Memory 1520

Processor 1510

Communications interface 1530

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHIZHEN CHI et al.** Dual Deep Network for Visual Tracking. *IEEE Transactions on Image Processing,* April 2017, vol. 26 (4